(19) Europäisches Patentamt
European Patent Office
Office européen des brevets

(11) **EP 3 040 876 A1**

(12) **EUROPEAN PATENT APPLICATION**
published in accordance with Art. 153(4) EPC

(43) Date of publication:
06.07.2016 Bulletin 2016/27

(51) Int Cl.:
*G06F 17/21* (2006.01)  *G06F 3/048* (2006.01)

(21) Application number: 14839894.4

(86) International application number:
PCT/JP2014/072841

(22) Date of filing: 29.08.2014

(87) International publication number:
WO 2015/030214 (05.03.2015 Gazette 2015/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 29.08.2013 JP 2013178303

(71) Applicant: Cognitee Inc.
Tokyo 140-0005 (JP)

(72) Inventors:
• KAWANO Rie
Tokyo 140-0005 (JP)
• KIMURA Tetsuya
Tokyo 140-0005 (JP)

(74) Representative: V.O.
P.O. Box 87930
Carnegieplein 5
2508 DH Den Haag (NL)

(54) **INFORMATION PROCESSING DEVICE, INFORMATION PROCESSING METHOD AND PROGRAM**

(57)    In the present invention, provided is a memory device for storing the following: tag information having a keyword and an attribute for scoring the keyword; connector information having an attribute for connecting two pieces of tag information and scoring the state of keywords connected to each other; and group information having an attribute for affiliating a plurality of pieces of tag information and scoring the affiliation states among the keywords. The keyword is scored on the basis of weighting carried out in accordance with tag information affiliation, weighting carried out in accordance with connector information affiliation, and weighting carried out in accordance with group information affiliation.

FIG. 2

## Description

Technical Field

The present disclosure relates to an information processing apparatus, information processing method and program for organizing, evaluating and analyzing records of proceedings, discussions and/or the like.

Background Art

When a meeting spans a plurality of sessions, it is possible to grasp the progress of the discussion by referencing a record of proceedings created in each of the sessions. Furthermore, if the record of proceedings is organized, it can be anticipated that discussions will proceed smoothly when the records are used in different meetings. In recent years, it has become possible to utilize electronic meeting systems using networks, but when the number of participants becomes large, relationships among those speaking to each other become complex, so there is a possibility that the discussion could become confused.

In connection with this, Patent Literature 1 discloses a document input and editing system that gives structure to the discussion and makes it possible for the contents of the discussion to be easily grasped through a visual display.

Citation List

Patent Literature

Patent Literature 1: Unexamined Japanese Patent Application Kokai Publication No. 2007-328471

Summary of Invention

Technical Problem

However, the system described in Patent Literature 1 connects objects indicating documents in a tree shape, so it is not possible to grasp relationships among documents that do not have a vertical relationship.

In consideration of the foregoing, it is an object of the present disclosure to provide an information processing apparatus and method capable of various types of evaluation and analysis of records of proceedings and discussions.

Solution to Problem

In order to achieve the above object, an information processing apparatus according to a first exemplary aspect of the present disclosure comprises:

a memory device for storing:

tag information possessing a keyword and an attribute for scoring the keyword;
connector information possessing an attribute for connecting two pieces of the tag information and scoring the connection state between the keywords; and
group information possessing an attribute for affiliating a plurality of pieces of the tag information and scoring affiliation states among the keywords;

a data acquirer which acquires various pieces of information including tag information, connector information and group information, from the memory device;
a visualizer which arranges the various pieces of information in accordance with relationship and makes the various pieces of information visible;
a weighting information acquirer which acquires weighting information that sets weightings for attributes of each piece of information;
a weightier which applies weighting set by the weighting information to the attributes of each piece of information; and
a score calculator which scores the keywords on the basis of the attributes of each piece of information to which weighting was applied by the weighting information.

In the information processing apparatus according to the first aspect of the present disclosure, preferably weighting in accordance with size, type or position is set for the tag information.

In the information processing apparatus according to the first aspect of the present disclosure, preferably weighting in accordance with shape connected to the tag information is set for the connector information.

In the information processing apparatus according to the first aspect of the present disclosure, preferably weighting in accordance with affiliation state or affiliation position of the tag information is set for the group information.

In the information processing apparatus according to the first aspect of the present disclosure, preferably the group information includes group tag information in which affiliation of the tag information is set in accordance with affiliation state or affiliation position.

In the information processing apparatus according to the first aspect of the present disclosure, preferably the visualizer includes a suggester which grasps the overall balance among the tag information, the connector information and the group information and making proposals on the basis of suggestion information settings.

In the information processing apparatus according to the first aspect of the present disclosure, preferably the tag information, the connector information and the group information sent via a network are accumulated in a database, and the various pieces of information are synchronized in real time by sharing the database with other information processing apparatuses.

In addition, an information processing method executed by a computer according to a second aspect of the present disclosure comprises:

> acquiring various pieces of information comprising tag information possessing a keyword and an attribute for scoring the keyword, connector information possessing an attribute for connecting two pieces of the tag information and scoring the connection state between the keywords, and group information possessing an attribute for affiliating a plurality of pieces of the tag information and scoring affiliation states among the keywords;
> acquiring weighting information that sets weightings for attributes of each piece of information;
> applying weighting set by the weighting information to the attributes of each piece of information; and
> scoring the keywords on the basis of the attributes of each piece of information to which weighting was applied by the weighting information.

In addition, a program according to a third aspect of the present disclosure causes a computer to execute:

> a step for acquiring various pieces of information comprising tag information possessing a keyword and an attribute for scoring the keyword, connector information possessing an attribute for connecting two pieces of the tag information and scoring the connection state between the keywords, and group information possessing an attribute for affiliating a plurality of pieces of the tag information and scoring affiliation states among the keywords;
> a step for acquiring weighting information that sets weightings for attributes of each piece of information;
> a step for applying weighting set by the weighting information to the attributes of each piece of information; and
> a step for scoring the keywords on the basis of the attributes of each piece of information to which weighting was applied by the weighting information.

Advantageous Effects of Invention

Because the records of proceedings and discussions can be multilaterally structured, various types of evaluation and analysis are possible. Not only can opinions and/or the like in the records of proceedings or discussions be simply reproduced, when the critical points of discussions are brought to lighter when similar opinions and/or the like are extracted, it is also possible to organize the information in accordance with objectives using the opinions and/or the like.

Brief Description of Drawings

> FIG. 1 is a drawing showing a configuration of an information processing apparatus according to an exemplary embodiment of the present disclosure;
> FIG. 2 is a drawing showing a structure of data stored in a memory device of the information processing apparatus;
> FIG. 3 is a drawing showing a flow of data recording executed by a controller of the information processing apparatus;
> FIG. 4 is a drawing showing a flow of tag data recording executed by the controller of the information processing apparatus;
> FIG. 5 is a drawing showing a flow of connector data recording executed by the controller of the information processing apparatus;
> FIG. 6 is a drawing showing a flow of group data recording executed by the controller of the information processing apparatus;

FIG. 7 is a drawing showing attributes of tag data input into an input device of the information processing apparatus;

FIG. 8 is a drawing showing attributes of connector data input into the input device of the information processing apparatus;

FIG. 9A-FIG.9C are drawings showing attributes of group data input into the input device of the information processing apparatus, with FIG. 9A showing a case of a simple group, FIG. 9B showing a case of a flow group and FIG. 9C showing a case of a quadrant group;

FIG. 10 is a drawing showing a record of proceedings that is the basis of input data input into the input device of the information processing apparatus;

FIG. 11 is a drawing showing data made visual by an output device of the information processing apparatus;

FIG. 12A-12B are drawings showing examples of data stored in the memory device of the information processing apparatus, with FIG. 12A showing an example of tag data and FIG. 12B showing an example of connector data;

FIG. 13C-13D are drawings showing examples of data stored in the memory device of the information processing apparatus, with FIG. 13C showing an example of group data and FIG. 13D showing an example of group tag data;

FIG. 14 is a drawing showing a flow of data visualization executed by the controller of the information processing apparatus;

FIG. 15A-15B are drawings showing a suggestion process executed in data visualization by the controller of the information processing apparatus;

FIG. 16 is a flowchart of the suggestion process executed by the controller of the information processing apparatus;

FIG. 17 is a flowchart of an editing process executed by the controller of the information processing apparatus;

FIG. 18 is a drawing showing a scoring flow executed by the controller of the information processing apparatus;

FIG. 19 is a drawing showing an example of results of totaling and calculating the various data in the information processing apparatus;

FIG. 20 is a drawing showing an example of results of totaling and calculating the various data in the information processing apparatus;

FIG. 21 is a flowchart of a digest creation and output process executed by the controller of the information processing apparatus; and

FIG. 22 is a drawing showing an example of a case of editing the various data with a plurality of information processing apparatuses.

Description of Embodiments

Below, an information processing apparatus according to the exemplary embodiment of the present disclosure is described in detail with reference to the drawings.

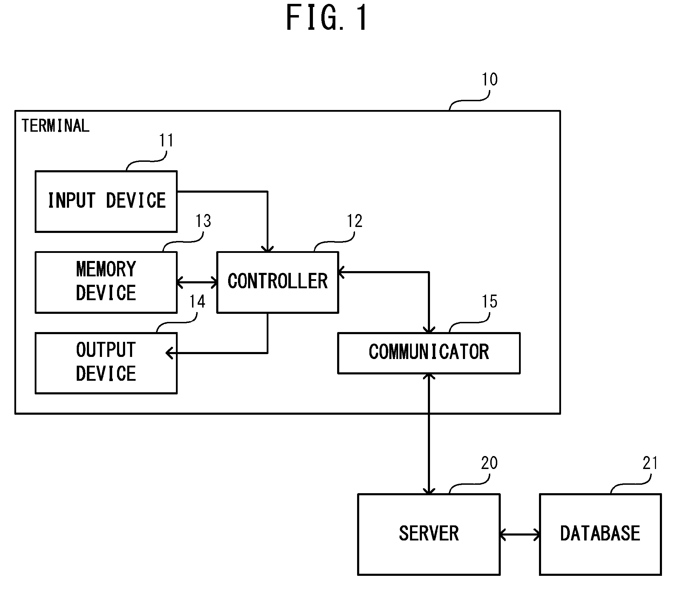

As shown in FIG. 1, an information processing apparatus 10 according to this exemplary embodiment comprises an input device 11, a controller 12, a memory device 13, an output device 14 and a communicator 15. The information processing apparatus 10 is a terminal apparatus comprising a computer and/or the like. For example, the information process apparatus 10 is a personal computer (PC), personal digital assistant (PDA), mobile phone, smartphone, tablet PC and/or the like.

The input device 11 comprises a user interface for inputting, and receives information a user inputs to an input device (for example, a mouse, keyboard and/or the like). Input includes, for example, manipulation of a keyboard or mouse on a personal computer, manipulation of a button on a personal digital assistant or mobile phone, manipulation of a touch panel on a tablet PC or smartphone, and/or the like.

The controller 12 comprises a processor, memory and/or the like, controls the input device 11, the memory device 13, the output device 14 and the communicator 15, and executes various types of processes described below. The controller 12 possesses memory (a main memory device). In addition to storing programs for the various types of processes executed by the processor, the memory is used as a work area when various types of processes are executed.

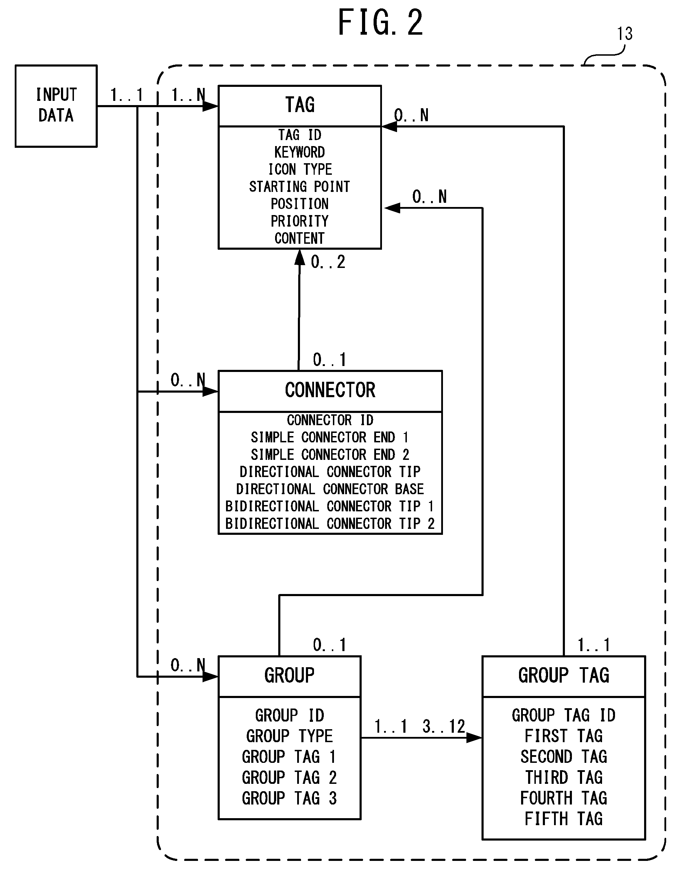

The memory device 13 comprises an auxiliary memory device such as a hard disk, flash memory and/or the like, and stores information temporarily or long-term. Specifically, as shown in FIG. 2, the memory device 13 stores tag data, connector data, group data and group tag data. In addition, the memory device 13 stores below-described suggestion information, weighting information and/or the like, and also stores intermediate data and result data created in the various types of processes.

The output device 14 comprises a user interface for outputting, and outputs result data of the various types of processes, and/or the like, to output devices. For example, the data is displayed on a display and/or the like (including the screen of a touch panel), or is printed from a printer and/or the like.

The communicator 15 comprises a hardware interface for communication and accomplishes exchanges of signals and data and/or the like with a server 20 connected wirelessly or with wires via a network such as the Internet and/or the like, wirelessly exchanges signals and data and/or the like, with other information processing apparatuses 10.

The server 20 is a host computer that provides prescribed processes and services to the information processing apparatus 10 connected via a network, and is equipped with a database 21. In the case of a client-server system, the server 20 is a server computer (including a Web server and an application server), and may provide services through client computing (provided through Software as a Service (SAAS) such as email, groupware, and/or the like). When the information processing apparatus 10 is connected to server 20, it would be fine to permit only legitimate connections by accomplishing prescribed authorization, such as a password and/or the like.

The database 21 is constructed by a prescribed data model (for example, a relational type, and/or the like) in a memory device with which the server 20 is provided, and the server 20 accomplishes control through a database management system. The server 20 receives and accumulates in the database 21 tag data, connector data, group data and group tag data created by a plurality of information processing apparatuses 10. Furthermore, the server 20 accomplishes searching and extraction, and/or the like, of this data in accordance with requests from the information processing apparatuses 10.

Information stored in the memory device 13 (including when accumulated in the database 21) is described with reference to FIG. 2. Input data acquired by the input device 11 is any of tag data, connector data, group data and group tag data. When input data exists, at least one piece of tag data exists.

First, the tag data is information with personal thoughts, discussions and/or the like ("discussions and/or the like") divided into the smallest unit. For example, these are various opinions in a record of proceedings or discussion in a debate or meeting, various main points when organizing thoughts such as notes or memos and/or the like, various sentences extracted from documents such as reports, articles, blogs (a type of website on the Internet) and/or the like ("opinions and/or the like"). The tag data is structured data having attribute values, and as attributes has information such as a tag ID, keyword, icons type, starting point, position, priority, content and/or the like. One piece of tag data is created for one opinion and/or the like in a discussion and/or the like.

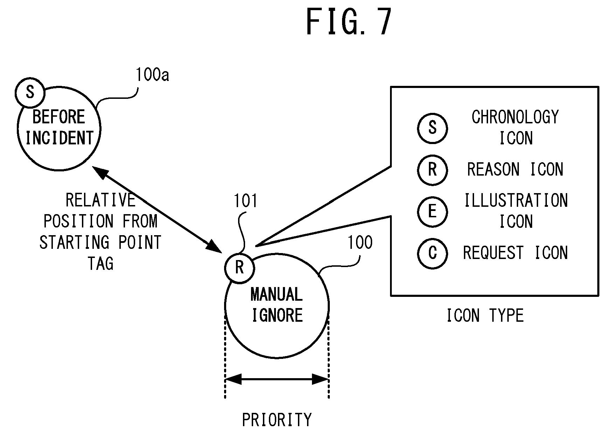

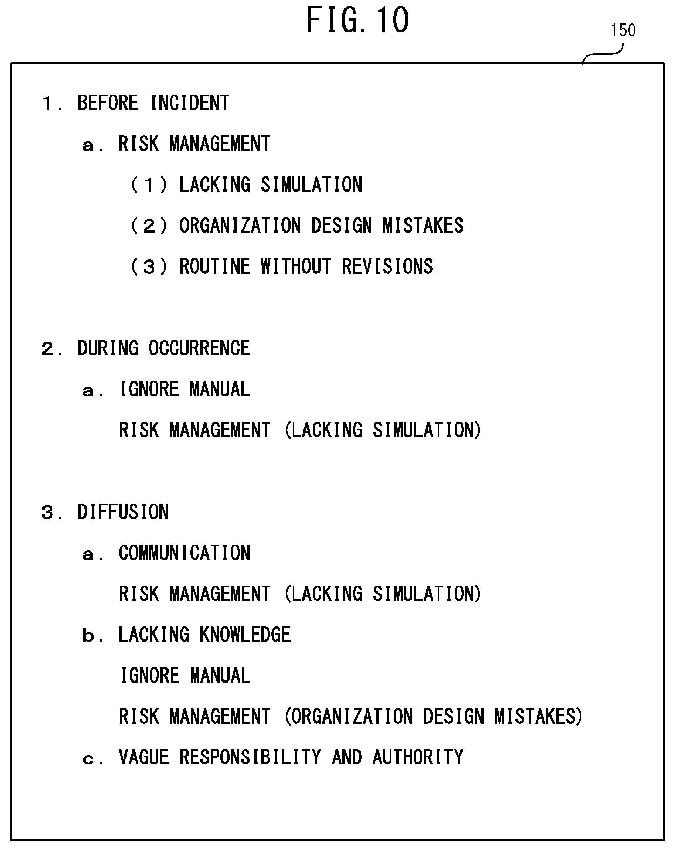

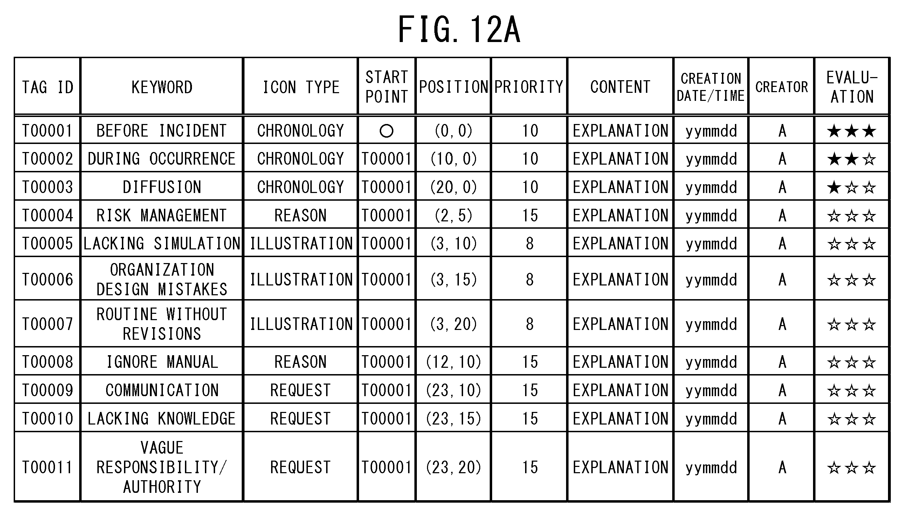

FIG. 12A shows one example of tag data. This tag data is obtained by analyzing a record of proceedings illustrated in FIG 10. The analyzer analyzes the record of proceeding and extracts sentences corresponding to tags. Next, a tag ID is appended to each tag and a keyword is extracted from each tag. Furthermore, an icon for use when displaying the tag is selected from among "chronology", "reason", "illustration" and "comparison". "Chronology" is selected when the tag at issue occurred chronologically with another tag of the same rank. "Reason" is selected when the tag at issue shows the reason for another tag. "Illustration" is selected when the tag at issue corresponds to an illustration of another tag. "Request" is selected when a proposal is made. These icons are merely illustrations, for it is possible to set others as appropriate, such as "evidence/facts", "counterproposal/warning" and/or the like. Details of the icons are described below with reference to FIG. 7. Furthermore, the departure point of the discussion is specified, and the tag that is the departure point is the "starting point." The tag ID of the tag of this starting point is set in the other tags. Furthermore, when icons showing tags are displayed, at what position they are arranged is hypothesized and coordinates (x,y) are established. The "tag" of the starting point is the origin (0,0). Next, the level of importance in the discussion of each tag is set as the priority. Furthermore, the content and creation date and time of the tag is set. In addition, the analyzer is set as the creator. Furthermore, the evaluation of the tag is set.

The connector data is data for connecting two pieces of tag data that have some kind of relationship in opinions and/or the like. The connector data is structure data having attribute values, and as attributes has information such as connector ID, two tag IDs connected to the connector, and/or the like, with the attributes possessed differing depending on the type of connector. The two tag IDs that are connected are related to the tag data. The two tag IDs that are connected are an end 1 of a simple connector and an end 2 of the simple connector, or a tip of a directional connector and a base of the directional connector, or a tip (tip 1) of a bidirectional connector and another tip (tip 2) of the bidirectional connector.

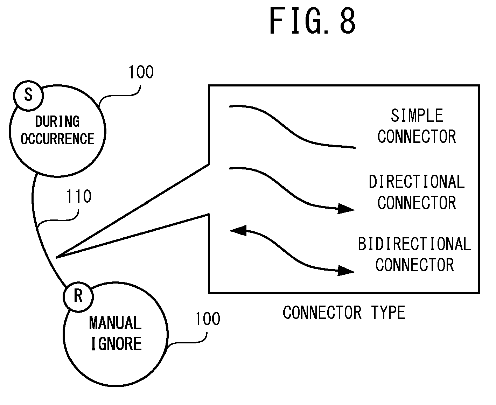

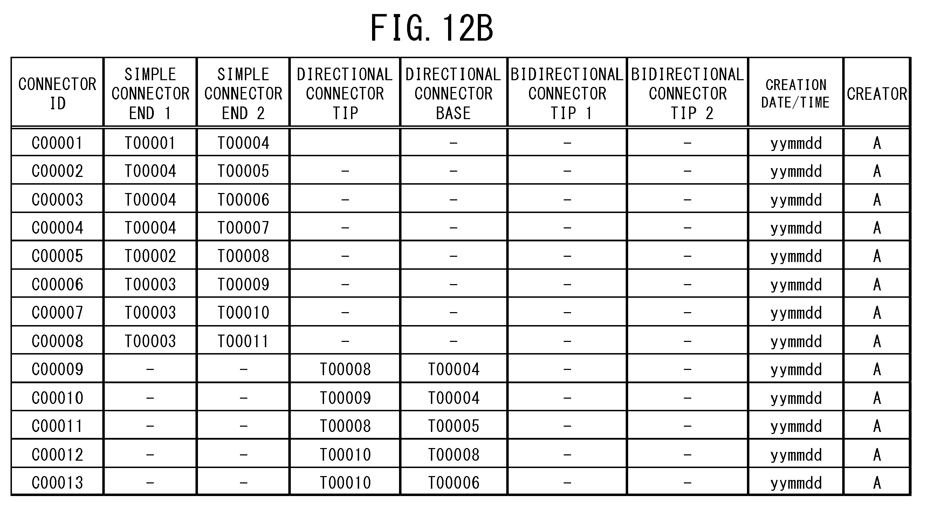

FIG. 12B shows one example of the connector data. The connector data is obtained by analyzing the record of proceedings illustrated in FIG. 10. The analyzer analyzes the mutual relationships among the plurality of tags found earlier, specifies the optimal connectors for realizing tag interrelation, specifies tags connecting one end (end 1) and another end (end 2), and specifies the tag ID. In addition, the creation date and time and the creator are specified. A concrete example of connectors is described below with reference to FIG. 8.

The group data is data for collecting and affiliating in a single group a plurality of pieces of tag data that are related. In the group data, separate group tag data is prepared and weightings of tag data affiliated with the group are set. The group data is data structured with attribute values, and has information such as group ID, group type, corresponding group tag ID and/or the like as attributes, with the number of attributes differing depending on the type of group. The corresponding group tag ID is related to the group tag data. The number of corresponding group tag IDs is variable in accordance with the affiliation state of the group. In this exemplary embodiment, the number is 3 or 12.

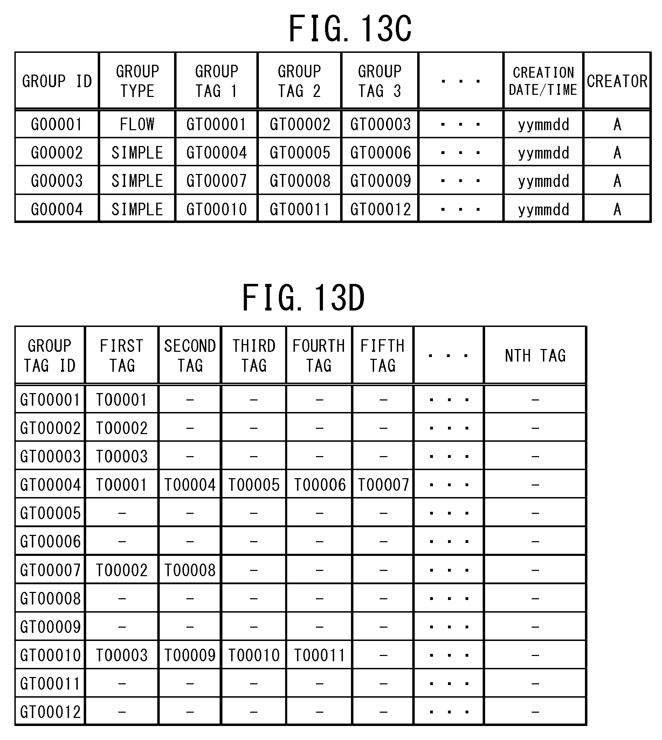

FIG. 13C shows one example of group data. The group data here is obtained through analyzing the record of proceedings illustrated in FIG. 10. The analyzer analyzes the contents of a plurality of tags found previously, and extracts a group of a plurality of tags that are related. The analyzer appends a group ID to the extracted group. Next, the analyzer assigns a group tag to the group of tags belonging to that group. In addition, the creation date and time, and the creator, are set.

The group tag data is structured data having attribute values, and as attributes has information such as group tag ID, tag IDs affiliated with the group, and/or the like. The tag ID affiliated with the group is related to the tag data. The number of tag IDs affiliated with the group is variable, and the tag data can be recorded only up to the number affiliated with the group (including 0).

FIG. 13D shows one example of group tag data. The group data here is obtained through analyzing the record of proceedings illustrated in FIG. 10. The analyzer analyzes the content of the plurality of tags and groups found previously, specifies tags belonging to each group tag and sets tag IDs by group tag.

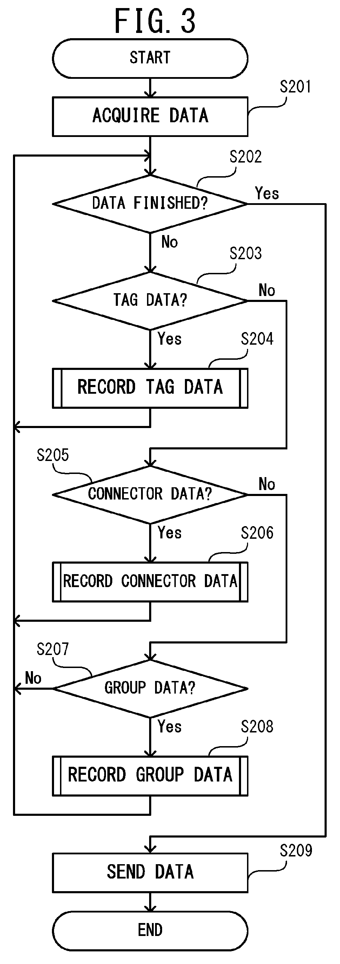

The information processing apparatus 10 having the above-described configuration accomplishes various types of processes in order to organize, evaluate and analyze discussions and/or the like. First, various types of data are recorded in the information processing apparatus 10. The procedure for recording the various types of data will be described with reference to FIGS. 3-6.

As shown in FIG. 3, first the controller 12 of the information processing apparatus 10 acquires, by means of the input device 11, data input by the user (step S201). A plurality of pieces of data may be included in one item of input, and as shown in FIG. 2, 1 to N1 (a natural number) pieces of tag data, 0 to N2 (a natural number) pieces of connector data and 0 to N3 (a natural number) pieces of group data are included. When a plurality of pieces of data is included, the initial data is first taken as the data that is the subject of processing. It would also be fine to sort the data as necessary.

These pieces of analysis data are created by the analyzer while in a discussion or while viewing the record of proceedings, as discussed above. FIGS. 12A and 12B and FIGS. 13C and 13D show the data in table form for ease in understanding, but the data need not be in table format.

When the input device 11 has acquired a plurality of pieces of data in the process of step S201, the controller 12 uses a counter to determine whether processes relating to subsequent recording have been accomplished for all of the data, from the first piece of data to the last piece of data (step S202). When the processes have concluded for all of the data (step S202: Yes), the process of step S209 is accomplished, while if unprocessed data remains (step S202: No), the processes of step S203 to S208 are repeated.

When unprocessed data remains in the process of step S202, the controller 12 determines whether or not the data that is the subject of processing is tag data (step S203). If the data is tag data (step S203: Yes), the controller 12 records the tag data in the memory device 13 (step S204) and returns to step S202 with the next piece of data as the subject of processing. If the data is not tag data (step S203: No), the process advances to step S205.

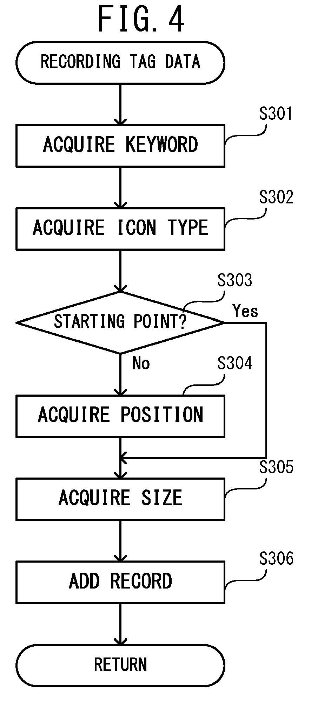

As shown in FIG. 4, in the tag data recording of step S204, first the controller 12 acquires necessary attribute values from the tag data. Specifically, words specified as keywords designating content such as opinion and/or the like are acquired (step S301), and an icon type designated as showing the type of content such as opinion and/or the like is acquired (step S302). Then, a flag indicating whether or not the data that is the subject of processing is data that is the starting point is acquired (step S303), and when the data is the starting point, the origin is acquired as the position, while if the data is not the starting point, a relative position from the data that is the starting point is acquired (step S304). Furthermore, the size of tag data designated as showing the priority of the opinion and/or the like is acquired (step S305). It would also be fine to make it possible to reference the contents of the opinion and/or the like, by acquiring or setting a link for the very content of the opinion and/or the like and acquiring the link destination. Finally, the controller 12 creates a record storing the various attribute values acquired in corresponding fields, and adds that record to a file for tag data created in the memory device 13 after appending a tag ID (step S306).

When the unprocessed data is not tag data in the process of step S203, the controller 12 determines whether or not the data that is the subject of processing is connector data (step S205). If this is connector data (step S205: Yes), the controller 12 records the connector data in the memory device 13 (step S206) and returns to step S202 with the next piece of data as the subject of processing. If the data is not connector data (step S205: No), the process advances to step S207.

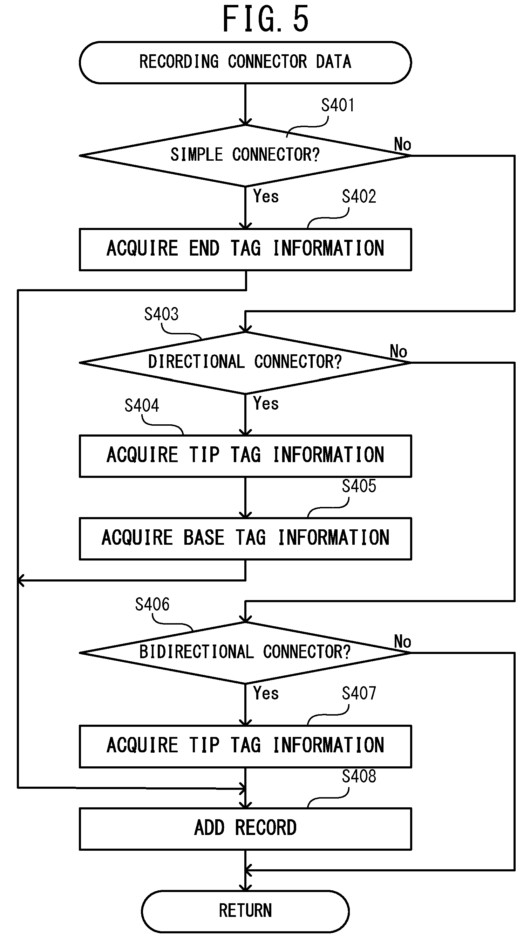

As shown in FIG. 5, in the recording of connector data in step S206, first the controller 12 acquires necessary attribute values from the connector data. Specifically, the shape of both ends indicating the type of connector is acquired, and a determination is made as to whether or not this is a simple connector (step S401). If this is a simple connector, information indicating the tag data connected to both ends of the connector (for example, tag IDs and/or the like) is acquired (step S402). If this is not a simple connector, a determination is made as to whether or not this is a directional connector (step S403). If this is a directional connector, information indicating the tag data connected to the tip side of the connector is acquired (step S404), and information indicating the tag data connected to the base side of the connector is acquired (step S405). If this is not a directional connector, a determination is made as to whether or not this is a bidirectional connector (step S406). If this is a bidirectional connector, information indicating the tag data connected to both ends (both tip sides) of the connector is acquired (step S407). Finally, the controller 12 stores the various attribute values acquired in the corresponding fields and creates a record, and adds the record to a file for connector data created in the memory device 13 after appending a connector ID (step S408).

When the unprocessed data is neither tag data nor connector data in the process of step S205, the controller 12 determines whether or not the data that is the subject of processing is group data (step S207). If the data is group data (step S207: Yes), the controller 12 records the group data in the memory device 13 (step S208) and returns to step S202 with the next piece of data as the subject of processing. If the data is not group data (step S207: No), the controller 12 returns to step S202 with the next piece of data as the subject of processing.

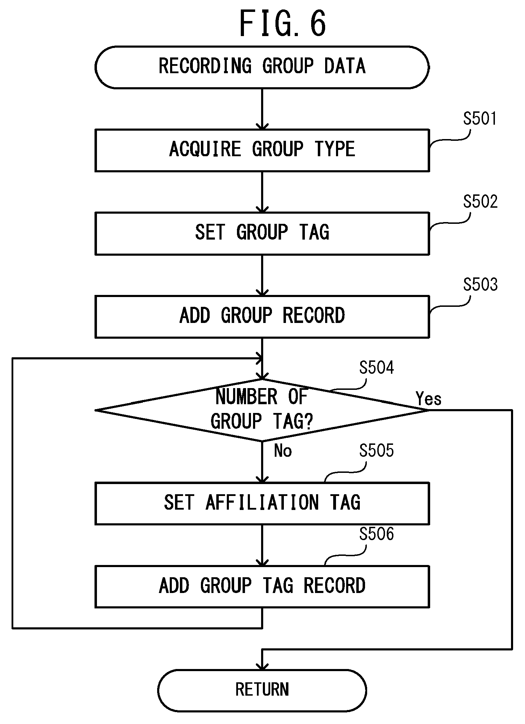

As shown in FIG. 6, in the recording of group data in step S208, first the controller 12 acquires necessary attribute values from the group data. Specifically, the type of group is acquired (step S501), and the number of fields for storing information (for example, group tag IDs and/or the like) indicating the group tag in accordance with the type of group is set (step S502). Then, the controller 12 creates a record by setting information indicating group tags in each field, and adds this record to a file for group data created in the memory device 13 after appending a group ID (step S503). Next, the controller 12 uses a counter and repeats subsequent processes for the number of pieces of information indicating the group tag that was set (step S504). Fields are prepared for the number of affiliated pieces of tag data, in the group tag that is the subject of processing (step S505). Then, the controller 12 creates a record by establishing information indicating the tag data in each field, and adds this record to a file for group tag data created in the memory device 13 (step S506).

When data through the final piece of data has been processed and all of the data has been processed in the process of step S202, the controller 12 sends the data recorded in the memory device 13 to the server 20 via the network from the communicator 15, and accumulates the data in the database 21 (step S209).

When the information processing apparatus 10 is provided with a graphical user interface (GUI), the information received by the input device 11 when recording each type of data is also displayed on a screen by the controller 12 outputting the data to the output device 14. In addition, by accumulating the various types of data in the database 21, a plurality of information processing apparatuses 10 connected via network to the server 20 can acquire the various types of data by means of the communicator 15, and the controller 12 can temporarily store the various types of data in the memory device 13 and output the data from the output device 14. If one of the information processing apparatuses 10 connected via network to the server 20 updates the various types of data, it would also be fine for the other information processing apparatuses 10 to be updated in real time.

Next, the various types of data the information processing apparatus 10 displays on the screen are described with reference to FIG. 7 through FIG. 11. The various types of data are expressed in graphics.

As shown in FIG. 7, the tag data of each type of data is expressed by a circular tag 100. A shape other than a circle is fine, but a perfect circle is preferable in order to connect the connector to the perimeter. The tag 100 is related to an opinion and/or the like in the discussion and/or the like, so keywords of the opinion and/or the like are displayed inside the graphic, an icon type 101 of the opinion and/or the like is arranged on the top left of the graphic, and the priority of the opinion and/or the like thereof is expressed by the size of the graphic (for example, the diameter and/or the like). In addition, when the tag 100 is selected by a pointing device such as a mouse and/or the like, the content of that opinion and/or the like is displayed. Besides this, it would also be fine to endow the graphic with information such as relative position (coordinates) from a tag 100a that is a starting point, and to express the relationship to other opinions and/or the like by means of the position. That is to say, the tag 100 is an object having these kinds of attributes. The weighting of the tag data itself differs depending on attributes such as priority, icon type 101 and/or the like.

The keywords are words concisely indicating the content of the opinion and/or the like linked to the tag data, are words representing that tag data, and also have a role in distinguishing from other tag data. The priority indicates the importance of the tag data, and a priority order is set when a tag data is referenced or extracted. The relative position enables weighting such as the relationship is strong the closer the distance among tags 100, or the significance changes depending on whether the position is on the right side or the left side of the tag 100. When there are a plurality of starting point tags 100a, information is also possessed indicating which of the starting point tags 100a is the reference. The icon type 101 expresses the type of content of the opinion and/or the like to which the tag 100 is related, and chronology icons, reason icons, illustration icons, comparison icons and/or the like are prepared.

With a chronology icon, the target is content indicating the flow of time, and by using such in combination with a below-described flow group, it is possible to indicate the degree of progress in a discussion and/or the like. With a reason icon, the target is the basis or reasoning related to another opinion and/or the like. With an illustration icon, the target is a specific example and/or the like relating to another opinion and/or the like along with the reason icon. With a comparison icon, the target is content comparing opinions antagonistic to another opinion and/or the like, counterproposals and/or the like. Besides these, it would be fine to appropriately prepare suggestion, investigation, development, supplement, question, caution, personnel, location and/or the like in accordance with the contents of the opinion and/or the like.

As shown in FIG. 8, out of the various types of data, connector data is expressed by a line-shaped connector 110. The connector 110 links related opinions and/or the like to each other, so tags 100 are connected to both ends of the line and the connector types are expressed by shapes on both ends of the line. Connection is possible at an arbitrary location on the tags 100, and the strength of the link between the tags 100 may be expressed by a thickness of the line or by the type of the line. That is to say, the connector 110 is an object having these kinds of attributes. As the connector type, simple connection, directional connection, bidirectional connection and/or the like are prepared, and the effect (weighting) on the tags 100 at both ends at the time of evaluation and analysis by the connector type differs.

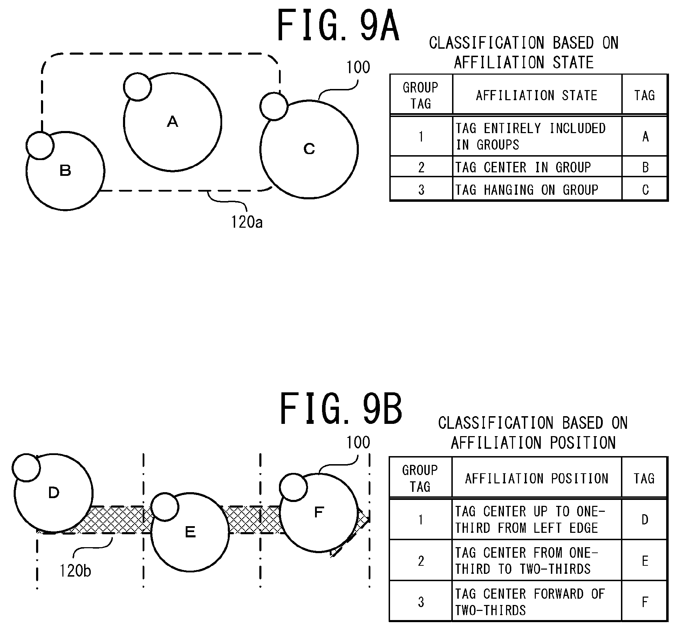

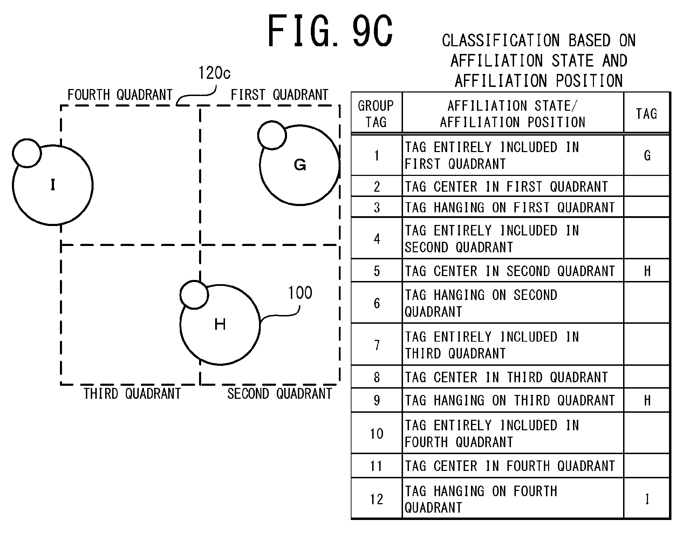

As shown in FIG. 9, out of the various types of data, the group data is expressed by a simple group 120a caused to be affiliated inside a closed region (see FIG. 9A), a flow group 120b caused to be affiliated on an arrow (see FIG. 9B), a quadrant group 120c caused to be affiliated in a square divided into four and/or the like (see FIG. 9C), and/or the like. The group is a collection of a plurality of related opinions and/or the like, so the tags 100 are caused to be affiliated within the area and the effect (weighting) given to the tags 100 at the time of evaluation and analysis differs through the affiliation status and affiliation position. That is to say, the group is an object having these kinds of attributes. Even when the tag 100 is hanging on the boundary line of the group, the tag is affiliated with that group. Weighting is possible from the two perspectives of the number of tags 100 included in the group and the number of groups to which a tag 100 is affiliated.

The simple group 120a of FIG. 9A is used when the desire is to simply compile the plurality of tags 100 into a single group. In the case of the simple group 120a, three classifications are made and weighting is accomplished, on the basis of the affiliation state. Specifically cases are categorized as (1) when the entire tag 100 is included in the simple group 120a, (2) when the center of the tag 100 is in the simple group and (3) when the tag 100 hangs on the simple group 120a. The tags 100 are affiliated with each group tag, with the categorization as the group tag data. Whereupon, the tags 100 of (A) in the drawing are affiliated with the group tag of (1) above, the tags 100 of (B) in the drawing are affiliated with the group tag of (2) above, and the tags 100 of (C) in the drawing are affiliated with the group tag of (3) above.

The flow group 120b of FIG. 9B is used when the desire is to partition the tags chronologically. In the case of the flow group 120b, positions are associated with time, and three classifications are made and weighting is accomplished on the basis of the affiliation position. Specifically, cases are categorized as (1) when the center of the tag 100 is up to one-third from the left edge, (2) when the center of the tag 100 is between from one-third to two-thirds , and (3) when the center of the tag 100 is forward of two-thirds. The tags 100 are affiliated with each group tag with this category as the group tag data. Whereupon, the tags 100 of (D) in the drawing are affiliated with the group tag of (1) above, the tags 100 of (E) in the drawing are affiliated with the group tag of (2) above, and the tags 100 of (F) in the drawing are affiliated with the group tag of (3) above.

The quadrant group 120c of FIG. 9C is used when the desire is to partition based on in which area coordinates expressed by the vertical axis and the horizontal axis belong out of the four areas, with the intersection of the vertical axis and the horizontal axis as the origin. In the case of the quadrant group 120c, weighting is accomplished by associating positions with coordinates and categorizing into 12 (= 4 x 3) on the basis of the affiliation status and the affiliation position. Specifically, for the first quadrant, categorization is by (1) when the tag is entirely included in the first quadrant, (2) when the center of the tag is in the first quadrant and (3) when the tag is hanging on the first quadrant, and similarly categorized into (4) to (6) for the second quadrant, into (7) to (9) for the third quadrant and into (10) to (12) for the fourth quadrant. The tags 100 are affiliated with each of the group tags, with this categorization as the group tag data. Whereupon, the tags 100 of (G) in the drawing are affiliated with the group tag of (1) above, the tags 100 of (H) in the drawing are affiliated with the group tags of (5) and (9) above, and the tags 100 of (I) in the drawing are affiliated with the group tag of (12) above.

It would also be fine to alter the definitions of group affiliation state and affiliation position. For example, with the flow group 120b, affiliation positions are categorized into three categories, but it would be fine to categorize into two or four or more categories. In addition, with the quadrant group 120c, the rectangle was partitioned into four areas, but it would be fine to partition this into two, or six, and/or the like. When the definition is altered, the number of group tags that are the number of categories also fluctuates accompanying this.

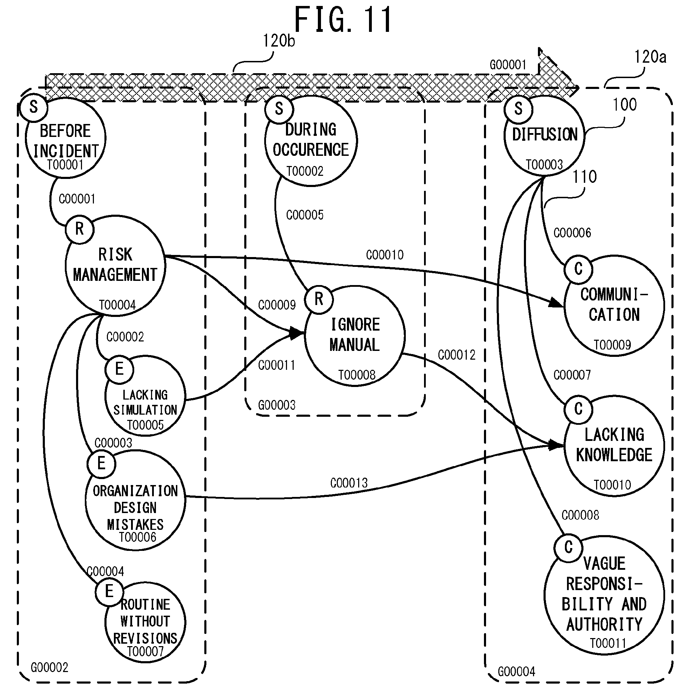

As discussions and/or the like, when a record of proceedings 150 such as that shown in FIG. 10 is used, the user makes the various pieces of content (opinions and/or the like) of the record of proceedings 150 into tags 100, as shown in FIG. 11, and links these with connectors 110 or compiles these with simple groups 120a, flow groups 120b and/or the like. Furthermore, the controller 12 of the information processing apparatus 10 receives the various types of data by means of the input device 11, and temporarily stores the various types of data in the memory device 13. Furthermore, the controller 12 makes the various types of data in the memory device 13 visible by means of the output device 14. Then, the controller 12 causes the communicator 15 to connect to the server 20 via a network and accumulates the various types of data temporarily stored in the memory device 13 in the database 21 provided in the server 20.

In the database 21, a tag table such as that shown in FIG. 12A, a connector table such as that shown in FIG. 12B, a group table such as that shown in FIG. 13C and a group tag table such as that shown in FIG. 13D are provided. After information about the creator and creation date and time are appended to the various types of data, the tag data is accumulated in the tag table, the connector data is accumulated in the connector table, the group data is accumulated in the group table and the group tag data is accumulated in the group tag data table.

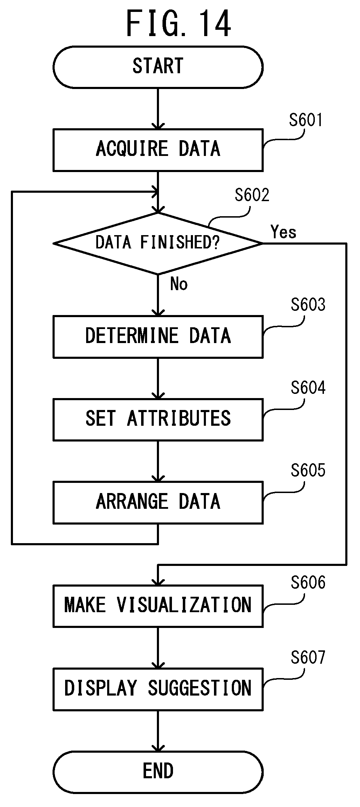

By accumulating the various types of data in the database 21, it is possible to use the various types of data with a plurality of information processing apparatuses 10. A procedure through which the information processing apparatus 10 takes and makes visible the various types of data is shown in FIG. 14.

First, the controller 12 of the information processing apparatus 10 makes a network connection to the server 20 and requests that the server 20 send the various types of data of the database 21. Upon receiving the various types of data, the controller 12 stores the acquired various types of data in the memory device 13 (step S601).

For the various types of data acquired in the process of step S601, the controller 12 successively retrieves the data from the memory device 13 and using a counter accomplishes the process from here on related to making the data visible, for all pieces of data from the first piece of data to the last piece of data (step S602). When the process for all pieces of data is finished (step S602: Yes), the process of step S606 is accomplished, while if unprocessed data still remains (step S602: No), the controller 12 repeats the processes of steps S603 to S605.

In the process of step S602, when unprocessed data remains, the controller 12 determines the type, whether the data that is subject to processing is tag data, connector data, group data or group tag data (step S603). Then, after determining the type of data, the attributes of that data are set (step S604). The data is arranged on the display screen from the output device 14 on the basis of the attributes of that data (step S605).

In the process of step S602, by processing through the last piece of data and arranging all of the data, the data becomes visible as shown in FIG. 11 (step S606).

Next, the controller 12 accomplishes a suggestion process (step S607). In this suggestion process, the controller 12, when the analysis data is made visible, grasps the balance of all of the tag data, connector data, group data and group tag data, and confirms whether any corresponds to the suggestion information acquired from the memory device 13. The suggestion information is information with a variety of standards established, such as balance of opinions and/or the like, arrangement of opinions and/or the like, and several cases that deviate from the standard are set as a suggestion pattern, and stored in advance in the memory device 13. For the analysis data, when there is an item corresponding to the suggestion data, a suggestion is displayed in accordance with the suggestion information.

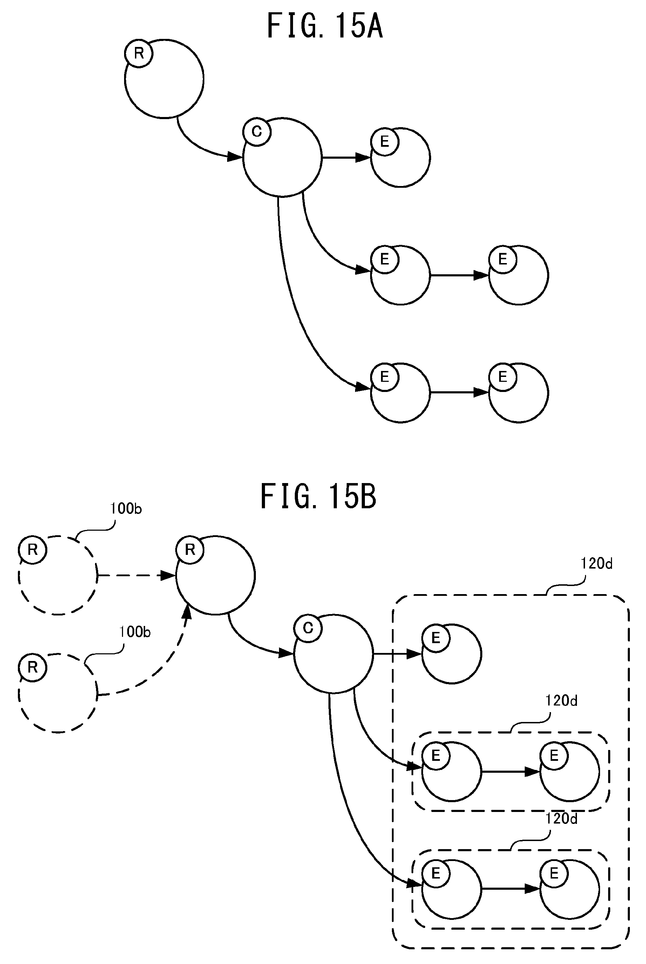

For example, when the data is made visible and is displayed as shown in FIG. 15A, of the seven pieces of tag data there is only one piece of tag data to which a reason icon is attached. At this time, if a suggestion pattern to the effect that there should be two or more reason icons is recorded in the memory device 13 or the DB 21 as balance for the entirety with reference to the suggestion information, a suggestion tag 100b for example indicated by a dotted line is displayed, for example as shown in FIG. 15B, and through this a proposal is made to the user to add two pieces of reason icon tag data. In addition, when two or more illustration icons are lined up, if a suggestion pattern to the effect that grouping should be done is recorded in the memory device 13 or the DB 21, a suggestion group 120d indicated by a dotted line is displayed, for example as shown in FIG. 15B, and through this a proposal is made to the user to add group data affiliating the illustration icon tag data.

Through this, the necessary information is supplemented and a balance among the various types of data as a whole is achieved. In addition, the user also knows how to add the various types of data, so the discussion and/or the like is easily organized.

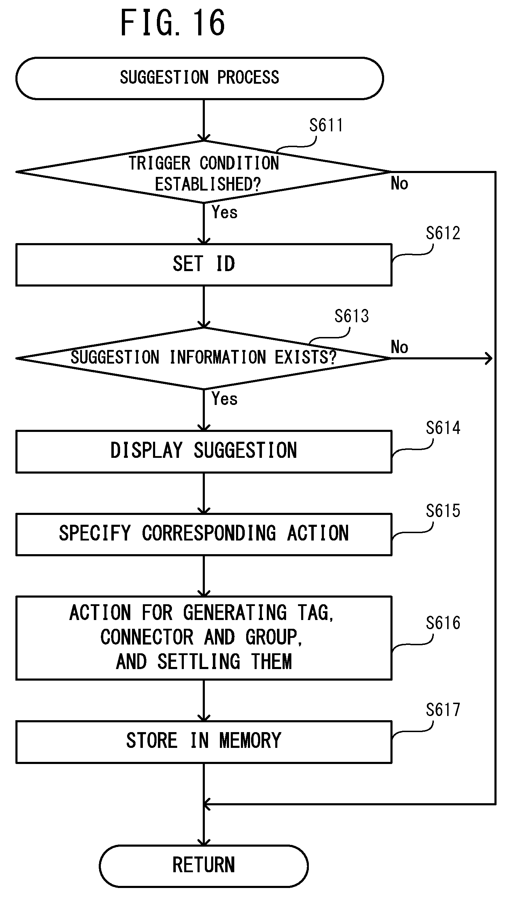

The suggestion process (step S607) is described with reference to FIG. 16. First, when the suggestion process starts (step S607), the controller 12 determines whether or not the displayed object state matches a predetermined suggestion process trigger condition (step S611). As the trigger condition, the state of the object, the time (time after an interval X has elapsed from the start, retention period, and/or the like) and/or the like are set in advance.

When the trigger condition has not been established (step S611: No), the current suggestion process concludes and the process returns to the main routine.

On the other hand, when the trigger condition has been established (step S611: Yes), the ID of the suggestion is set (step S612). When a plurality of trigger conditions is established, an ID is acquired for each established trigger condition.

Next, a determination is made as to whether or not suggestion information corresponding to the established trigger condition is stored in the memory device 13 (or the database 21) (step S613). When the suggestion information corresponding to the established trigger condition does not exist (step S613: No), the process returns to the main routine.

On the other hand, when suggestion information corresponding to the established trigger condition exists (step S613: Yes), the suggestion is displayed, as illustrated in FIG. 15B (step S614).

Next, a user's action for the displayed suggestion is specified (step S615).

In response to the specified action (command), a tag, connector and group are generated and settled (step S616). There are also cases in which the user accomplishes a process in accordance with the displayed suggestion, ignores the suggestion and does not respond at all, or accomplishes a different process while referencing the suggestion.

Next, the contents of the user's actions are stored in the memory device 13 and the database 21 (step S617). Through this, the analysis data group illustrated in FIGS. 12 and 13 is updated.

By manipulating the displayed object, it is possible to make the display more suitable and also to correct the analysis data.

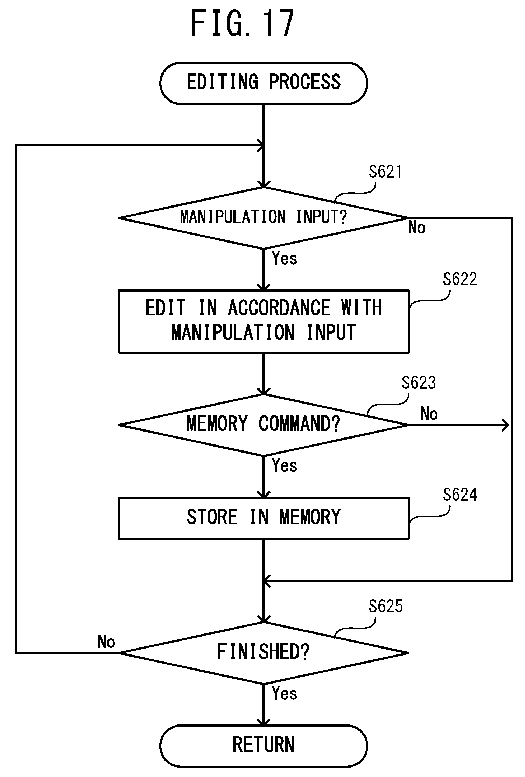

Below, an editing process for editing the analysis data and the display content is described with reference to FIG. 17.

First, when the editing process begins, the controller 12 determines whether or not a command for editing from the user has been input from the input device 11 (step S621). For example, when addition of an object (icon) and alternation, deletion and/or the like of displayed objects are commanded, the determination is that there was an editing command. Commands from the user, like drawing software and/or the like, are easily possible for example by clicking and dropping and dragging icons, selecting from a toolbox a button to which an action is assigned, and/or the like.

If there is no command from the user (step S621: No), the process jumps to step S625.

On the other hand, when it is determined that there was a command from the user (step S621: Yes), a process in accordance with the content of the command is accomplished. For example, a process such as adding a new icon, deleting an existing icon, modifying an existing icon and/or the like is accomplished in accordance with the user's command.

Following this, a determination is made as to whether or not storing was commanded (step S623). If storing was commanded (step S623: Yes), the display contents are stored in the memory device 13 and are also stored in the database 21 (step S624). Through this, the analysis data itself illustrated in FIGS. 12 and 13 is updated. On the other hand, if storing is not commanded (step S624: No), the process skips step S624 and proceeds to step 625.

After this, the controller 12 determines whether or not finish of the editing process has been commanded (step S625). If finish was commanded (step S625: Yes), the editing process concludes. If finish was not commanded (step S625: No), the process returns to step S621 and the editing process continues.

In this manner, it is possible to create and edit various analysis data by selecting and arranging icons on the editing screen, either live or while referencing the record of proceedings. In addition, it is possible to create analysis data in advance and store this data in the database 21, and to edit this data using a GUI screen through an editing process and to write the data back to the database 21.

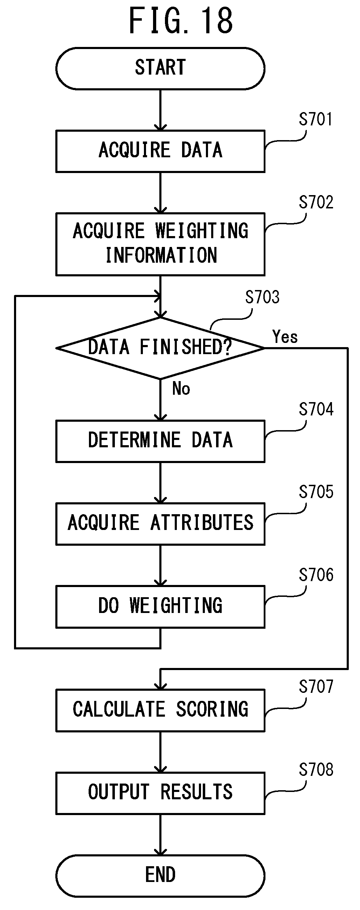

Furthermore, a method for using the various types of data accumulated in the database 21 to numerically evaluate and analyze the discussion and/or the like organized as shown in FIG. 11 will be described with reference to FIG. 18 through FIG. 20. First, a procedure through which the information processing apparatus 10 scores the various types of data is shown in FIG. 16.

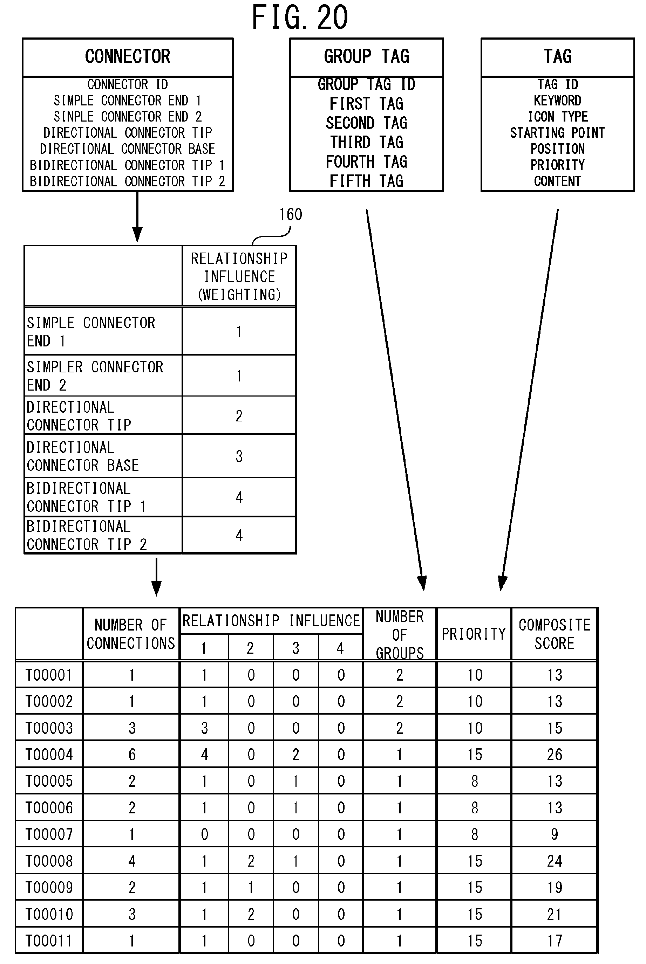

The controller 12 of the information processing apparatus 10 acquires the various types of data from the database 21 and stores those various types of data in the memory device 13 (step S701). Then, the controller 12 acquires the weighting information as well and stores that information in the memory device 13 (step S702). As shown in FIG. 20, weighting information 160 is information designating weighting for each of the attributes of the various types of data, and is set by the user or a plurality of pieces of information is set in advance and stored in the memory device 13 and then selected by the user.

For the various types of data acquired in the process of step S701, the controller 12 successively reads out data from the memory device 13, and using a counter accomplishes a process related to subsequent scoring for all of the data from the first piece of data to the final piece of data (step S703). When the process for all of the data has finished (step S703: Yes), the process of step S707 is accomplished, while if unprocessed data still remains (step S703: No), the processes of steps S704 to S706 are repeated.

When unprocessed data still remains in the process of step S703, the controller 12 determines whether the data that is the subject of processing is tag data, connector data, group data or group tag data (step S704). Then, the weighting information is referenced and attributes that are the subject of setting weightings in the data for which the type was determined are acquired (step S705). A weighting designated in the weighting information is set in the acquired attribute values, and weighting is accomplished (step S706).

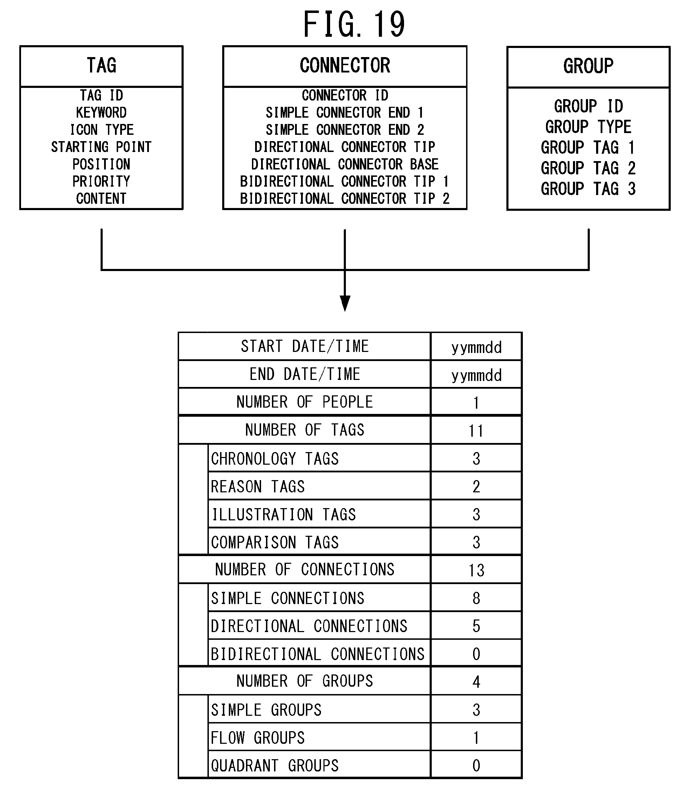

When processing through the final piece of data has been accomplished and all data has been processed in the process of step S703, the controller 12 accomplishes scoring by totaling the weighted attribute values in each piece of data (step S707). In step S706 weighting was accomplished on each piece of data, but it would be fine to accomplish weighting through a combination of tag data, connector data, group data and group tag data. In this case, the controller 12 scores by accomplishing weighting at the time of totaling. The controller 12 stores the scored results in the memory device 13 and also displays the results on a screen and/or the like from the output device 14 (step S708). Examples of scored results are shown in FIG. 19 and FIG. 20.

In the example shown in FIG. 19, characteristics of the discussion and/or the like are grasped. The information processing apparatus 10 acquires the tag data, connector data and group data from the database 21 with which the server 20 is equipped, via a network. The various types of data received by the communicator 15 are temporarily stored by the controller 12 in the memory device 13. When various types of data are stored in advance in the memory device 13 of the information processing apparatus 10, it would also be fine to use that data.

When the various types of data stored in the memory device 13 are totaled, it is learned that of the 11 pieces of tag data, three are chronology tags, two are reason tags, three are illustration tags and three are comparison tags. Whereupon, evaluation such as the following is possible: from the number of chronology tags, the discussion and/or the like is proceeding at a third stage; from the number of reason tags, reasons were attached twice for the opinions and/or the like but this is small at just 18% of the total; from the number of illustration tags, illustrations were done three times in the opinions and/or the like; from the number of comparison tags, three counterproposals emerged as a comparison of the discussion; and/or the like.

In addition, of the 13 pieces of connector data, it is learned that there are 8 simple connections, 5 directional connections and 0 bidirectional connections. Whereupon, an evaluation that simple connections are 62% of the total is possible. Moreover, of the four pieces of group data, it is learned that there are three simple groups, one flow group and 0 quadrant groups. Whereupon, an evaluation that simple groups are 75% of the total is possible. The time of the discussion and/or the like is computed from the starting date and time and the ending date and time, and it is possible to calculate the average number of statements per minute per number of participants.

In the example shown in FIG. 20, the connectors are evaluated and the effect of the tags is computed. The information processing apparatus 10 acquires the tag data, the connector data and the group tag data from the database 21 with which the server 20 is equipped, via a network. The various types of data received by the communicator 15 are temporarily stored by the controller 12 in the memory device 13.

For the connector data, the relationship influence on the tag data by the connector type is set in accordance with the weighting information 160 as the weighting. In the case of a simple connection, the relationship influence of the tag data connected at both ends is set as 1. In the case of a directional connection, the relationship influence of the tag data connected at the tip side is set as 2 and the relationship influence of the tag data connected at the base side is set as 3. In the case of a bidirectional connection, the relationship influence of the tag data connected at both ends is set as 4. For example, for the tag data of T00008, there is one simple connection, two tip sides of directional connections and one base side of a directional connection for a total of four connections, so the relationship influence is 1 x 1 + 2 x 2 + 1 x 3 = 8. For the tag data, the value of the priority is used. For the group data, the number of group tags in which tags are set (that is to say, the number of groups to which tags are affiliated) is counted.

Furthermore, for the various pieces of tag data, the relationship influence, the number of affiliated groups and the priority are totaled and a composite score is computed. For example, for the tag data of T00004, the relationship influence is 10, the affiliated group number is 1 and the priority is 15, so the composite score is 26 points. Whereupon, the piece of data with the highest composite score is the tag data of T00004, and it is possible to make an evaluation that this tag is the one having the greatest influence overall. In this manner, a totaling attribute and an attribute taking weighting into consideration are set in accordance with what is being evaluated and analyzed. By making a pattern of attributes used as parameters at the time of computations and storing these attributes in the information processing apparatus 10 or the server 20, it is possible to accomplish evaluation and analysis in accordance with the user's needs.

Another example is digesting of the discussion and/or the like. When digesting the discussion and/or the like, the creation date and time (time stamp) is appended to each piece of tag data, so the tag data is arranged in chronological order and the contents of opinions and/or the like are extracted. Through this, it is possible to reproduce the progress of the discussion and/or the like. In addition, an evaluation column is created in each piece of tag data, so when the digested items are disclosed on a website and/or the like on the Internet, it is possible to have a third party evaluate the various opinions and total the evaluation results.

In addition, it would be fine to successively arrange and display the tags in time stamp order. In this case, it would be fine to extract tags with importance in the top M% (for example, 30%) and to read only the keywords or sentences of the extracted tags. A tag's importance can be determined for example on basis of the priority shown in FIG. 12A, the score found in step S707 of the flowchart shown in FIG. 18, the " composite score " shown in FIG. 20, and/or the like.

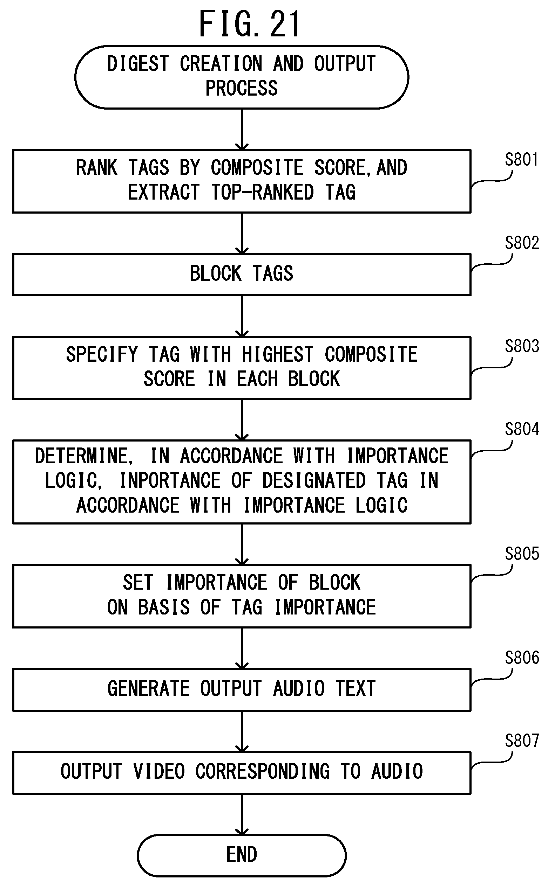

Another example of the digest creation process will be described with reference to FIG. 21.

1) First, the controller 12 ranks the tags in order of importance and extracts tags in the top M% (for example, 50%) of the subjects read (step S801). A tag's importance is displayed by a score found in step S707 of the flowchart shown in FIG. 18, for example. Accordingly, in the example of FIG. 11, the tags T00003, 4, 8, 9, 10 and 11 are selected as the top of the rankings on the basis of the "composite score" shown in FIG. 20.

2) Next, the tags are blocked (step S802). To explain in greater detail, if there are tags that are grouped, those tags make a block. In addition, for tags that do not belong to a group, a determination is made as to with what group the tag is connected. That tag is inserted into the same block as that group, as a subordinate group of the determined group. In the example of FIG. 11, all of the tags belong to a group, so for example block 1 is T00001, 4, 5, 6 and 7, block 2 is T00002 and 8, block 3 is T00003, 9, 10 and 11 and block 4 is T00001, 2 and 3.

3) Next, in each block the tag with the highest composite score is specified (step S803). In the above-described example, this is T00004 (reason) in block 1, T00008 (reason) in block 2, T00010 (request) in block 3 and T00003 (chronology) in block 4.

4) Next, the importance of the tags specified in step S803 is determined in accordance with predetermined importance logic (priority logic) (step S804).

Here, assuming that the logic that request tag = reason tag = evidence/fact tag > counterproposal/warning tag > chronology tag has been set, the importance becomes tag

$$T00004 = T00008 = T00010 \gg T00003.$$

5) Next, the importance of a block is set in accordance with the importance of the tag determined in step S804 (step S805). Specifically, the block having the tag with the highest rank is set as the first, and from there the order of blocks is determined in accordance with the ranking of tags included (step S804). Groups with a nested structure are processed next. Flow groups follow the flow thereof. Within the group, rank is determined in accordance with the flow of the connector's directional connections. In the above-described example, block 1 > block 2 > block 3. Depending on the composite score creation logic, there are cases in which block 3 containing T00010 is set as most important.

The controller 12 generates output audio text on the basis of the importance of the blocks that was determined (step S806). The output audio text creation action will be described in detail.

a) First, block 1 is processed. Here, tags T00004 and T00008 are linked by a directional connector, so for these two the connection phrase "caused by" is used.
Next, tag T00004 is a reason icon, so "by reason of" is connected after the reading of the tag T00004.
As a result, the connecting sentence "Tag T00008 is caused by reason of tag T00004" is created.
b) Next, block 2 is processed.
The tag T00008 is linked to the tag T00010 by a directional connector, so the connecting phrase "caused by" is set.
Next, the tag T00010 is a "question" tag, so "is proposed" is appended.
As a result, the sentence "It is proposed that the tag T00010 is caused by reason of the tag T00008" is created.
c) Next, block 3 is processed.
In block 3, the tags T0003, 9 10 and 11 remain, so these are to be processed.
First, the tag T00003, which is a prefix is placed as a process in the block, and "at the time of" is appended because this tag is a chronology tag.
Following this, all of the top ranking tags T0009, 10 and 11 that hang from the tag T00003 are read in parallel.
Then, because the number hanging is 3, "exist" is set.
As a result, at the time of the tag T00003, the sentence "the three tags T00010, T00009, T00011 exist" is created.
d) Finally, the following audio output text is generated:

"In this discussion [XXXX (title)], [risk management (T00004)] is 'important'. [Ignoring manuals (T00008)] 'is caused' 'by reason of [risk management (T00004)]. 'It is proposed' that [lack of knowledge (T00010)] 'is caused' 'by reason of [ignoring manuals (T00008)]. 'At the time of [diffusion (T00003)], the 'three' of [lack of knowledge (T00010)], [communication (T00009)], [vague responsibility and authority (T00011)] 'exist'".
Next, the controller 12 outputs the action along with reading the generated output audio text (step S807).

Specifically,

a) The "keyword" of the tag with the highest composite scores is displayed linked to (the corresponding tag) "is important" in the (title).
For example, "In [XXXX (title)], [risk management (T00004)] 'is important'" is displayed.
b) Next, the entirety of block 1 is displayed.
c) Next, the audio text "[Ignoring manuals (T00008)] 'is caused' 'by reason of [risk management (T00004)]" is read out.

During this time, a switch is made to displaying block 2.

d) Next, the audio text "'It is proposed' that [lack of knowledge (T00010)] 'is caused' 'by reason of [ignoring manuals (T00008)]" is read out.

During this time, a switch is made to display the tag T00010.

e) Next, the audio text "'At the time of [diffusion (T00003)], the 'three' of [lack of knowledge (T00010)], [communication (T00009)], [vague responsibility and authority (T00011)] 'exist'" is read out. During this time, block 3 is displayed.

In this manner, a digest of the discussion is created, and video and audio are output. Through the digest output, it becomes possible to easily understand the flow of the discussion.

In step S805, it would be fine display a new block in conjunction with the read-out of tags, leaving the display of blocks previously displayed unchanged.

With the above exemplary embodiment, the record of proceedings and the discussion are multilaterally structured, so various evaluations and analyses are possible. Not only are the opinions and/or the like in the record of proceedings and the discussion reproduced simply, the critical points of the discussion are brought to light and similar opinions and/or the like are extracted, making it easy to organize the opinions and/or the like in accordance with the objective used.

Not only are tag data, connector data, group data and group tag data weighted, by accomplishing weighting that combines these, more varied evaluation and analysis is possible.

By using suggestion information, necessary information is supplemented and a balance among the various types of data as a whole is achieved. In addition, the user also understands how the various types of data should be added, making it easy to organize the discussion and/or the like.

In addition, it is possible to analyze the discussion trend. For example, calculations and extractions requiring designation of complex conditions become easy, such as extracting the main discussion points, extracting discussion points that become triggers having an effect on others, discussion density, average number of words said, ratio of types of words raid, amount and ratio of reasons or illustrations, numbers and ratios of contrary opinions or questions, characteristics of the discussion structure and the ratio of those, degree of contribution and tendencies by participant, and/or the like.

Furthermore, it is also possible to analyze progress and changes, and to makes comparisons to others. For example, it is possible to make fixed point observations of regular meetings of the same group or submitted reports and/or the like, and to compare the productivity or trends of each meeting. In training or instruction and/or the like, for reports related to topics it is possible to score the various reports and to compare the discussion points that are lacking. By analyzing reports and accounts of the same event or lecture, it is possible to increase the comprehensiveness of information. By looking at the same types of phrases and key points in a plurality of reports, it is possible to easily grasp the important points.

The functions of the information processing apparatus 10 according to the above-described exemplary embodiment can be realized through special hardware, or can be realized by a normal computer system. For example, it is possible to configure an apparatus for executing the above-described processes by having the program stored in the memory device 13 stored on and distributed via a computer-readable memory medium such as a flexible disk, compact disc read-only memory (CD-ROM), digital versatile disk (DVD), magneto optical (MO) disk and/or the like, and installing the program on a computer.

In addition, the program may be stored on a disk device and/or the like possessed by the server 20 on a network, and may be downloaded and/or the like to the information processing apparatus 10. It is also possible to achieve the above-described processes by starting execution while transferring the program via a network.

Furthermore, it is possible to achieve the above-described processes by causing all or a portion of the program to be executed on the server 20 (server-side application) and for the information processing apparatus 10 to execute the program while sending and receiving information related to the program via a network.

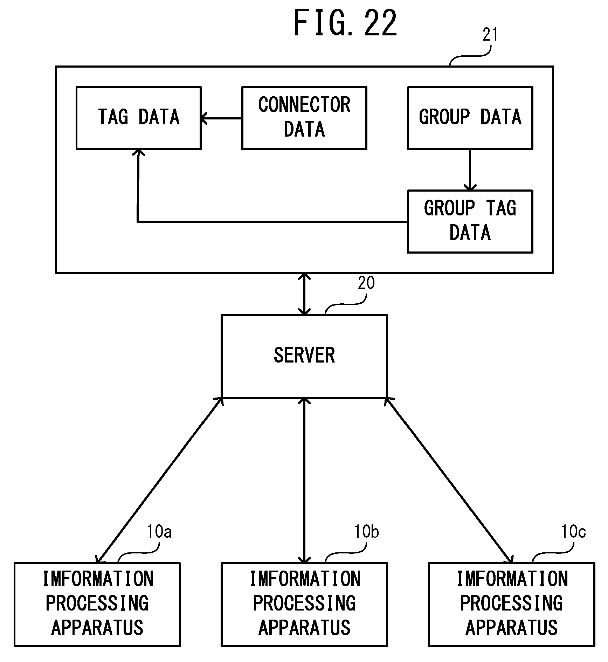

For example, as shown in FIG. 22, processes (see FIG. 16) for doing evaluation and analysis using the various types of data (tag data, connector data, group data, group tag data) accumulated in the database 21 are executed by a program on the server side. A plurality of information processing apparatuses 10a, 10b and 10c dispatch processes to the server 20, and the results are sent to the various information processing apparatuses 10a, 10b and 10c.

In addition, as shown in FIG. 22, the various types of data accumulated in the database 21 are respectively referenced by the plurality of information processing apparatuses 10a, 10b and 10c, and when one information processing apparatus 10a accomplishes editing such as adding, updating, deleting and/or the like, the data is locked so that the other information processing apparatuses 10b and 10c cannot do editing, and the lock is released when the information processing apparatus 10a completes editing. Through this, it is possible for a plurality of users to participate in real time, similar to a teleconferencing system.

Furthermore, by making this groupware, it is possible to manage the schedule via a scheduler prior to the meeting, to organize the discussion in real time in the meeting and to make it possible to browse the record of proceedings or a digest after the meeting. When browsing, it would be fine to provide information by appending audio so that the digest is read out, or to make a movie of the discussion in chronological order. In addition, it would be fine to realize this by means of a social networking service (SNS) and/or the like, and to share to an SNS and/or the like. Furthermore, it would be fine to use the suggestion information to function as a reminder prior to the meeting, and to cause a notification such as a warning and/or the like to be produced when the progress of the meeting becomes slow.

When the above-described functions are realized through sharing with an operating system (OS) or through cooperation between a OS and applications, it would be fine for only the portions other than the OS to be stored on and distributed via a medium, and in addition to be downloaded and/or the like to the information processing apparatus 10.

In addition, the means of realizing the functions of the controller 12 is not limited to software, but may be realized in whole or in part by special hardware (circuits and/or the like).

Furthermore, instead of the input of information accomplished by the user to the information processing apparatus 10, it would be fine for a document such as the record of proceedings and/or the like to be taken into the information processing apparatus 10, and for the controller 12 to automatically recognize and create the tag data, connector data and group data.

The exemplary embodiment of the present disclosure was described above, but various modifications and combinations necessary for design convenience or other factors are included within the scope of the present disclosure corresponding to the disclosure stated in the "Claims" or concrete examples stated in the "Description of Embodiments."

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2013-178303, the entire disclosure of which is incorporated by reference herein.

Reference Signs List

    10 Information processing apparatus
    11 Input device
    12 Controller
    13 Memory device
    14 Output device
    15 Communicator
    20 Server
    21 Database
    100, 100a Tags
    100b Suggestion tag
    101 Icon type
    110 Connector
    120a Simple group
    120b Flow group
    120c Quadrant group
    120d Suggestion group
    150 Record of proceedings
    160 Weighting information

**Claims**

1. An information processing apparatus comprising:

      a memory device for storing:

            tag information possessing a keyword and an attribute for scoring the keyword;
            connector information possessing an attribute for connecting two pieces of the tag information and scoring the connection state between the keywords; and
            group information possessing an attribute for affiliating a plurality of pieces of the tag information and scoring affiliation states among the keywords;

      a data acquirer which acquires various pieces of information including tag information, connector information and group information, from the memory device;
      a visualizer which arranges the various pieces of information in accordance with relationship and makes the various pieces of information visible;
a weighting information acquirer which acquires weighting information that sets weightings for attributes of each piece of information;
a weightier which applies weighting set by the weighting information to the attributes of each piece of information; and
a score calculator which scores the keywords on the basis of the attributes of each piece of information to which weighting was applied by the weighting information.

2. The information processing apparatus according to Claim 1, wherein weighting in accordance with size, type or position is set for the tag information.

3. The information processing apparatus according to Claim 1 or 2, wherein weighting in accordance with shape connected to the tag information is set for the connector information.

4. The information processing apparatus according to any one of Claims 1 to 3, wherein
weighting in accordance with affiliation state or affiliation position of the tag information is set for the group information.

5. The information processing apparatus according to any one of Claims 1 to 4, wherein
the group information includes group tag information in which affiliation of the tag information is set in accordance with affiliation state or affiliation position.

6. The information processing apparatus according to any one of Claims 1 to 5, wherein
the visualizer includes a suggester which grasps the overall balance among the tag information, the connector information and the group information and making proposals on the basis of suggestion information settings.

7. The information processing apparatus according to any one of Claims 1 to 6, wherein
the tag information, the connector information and the group information sent via a network are accumulated in a database, and the various pieces of information are synchronized in real time by sharing the database with other information processing apparatuses.

8. An information processing method executed by computer comprising:

acquiring various pieces of information comprising tag information possessing a keyword and an attribute for scoring the keyword, connector information possessing an attribute for connecting two pieces of the tag information and scoring the connection state between the keywords, and group information possessing an attribute for affiliating a plurality of pieces of the tag information and scoring affiliation states among the keywords;
acquiring weighting information that sets weightings for attributes of each piece of information;
applying weighting set by the weighting information to the attributes of each piece of information; and
scoring the keywords on the basis of the attributes of each piece of information to which weighting was applied by the weighting information.

9. A program that causes a computer to execute:

a step for acquiring various pieces of information comprising tag information possessing a keyword and an attribute for scoring the keyword, connector information possessing an attribute for connecting two pieces of the tag information and scoring the connection state between the keywords, and group information possessing an attribute for affiliating a plurality of pieces of the tag information and scoring affiliation states among the keywords;
a step for acquiring weighting information that sets weightings for attributes of each piece of information;
a step for applying weighting set by the weighting information to the attributes of each piece of information; and
a step for scoring the keywords on the basis of the attributes of each piece of information to which weighting was applied by the weighting information.

# FIG. 1

TERMINAL — 10

INPUT DEVICE — 11

MEMORY DEVICE — 13

CONTROLLER — 12

OUTPUT DEVICE — 14

COMMUNICATOR — 15

SERVER — 20

DATABASE — 21

# FIG. 2

13

```
┌──────────┐  1..1 ┆ 1..N  ┌──────────────────┐  0..N
│  INPUT   │──────────────▶│       TAG        │◀─────────────┐
│   DATA   │       ┆       ├──────────────────┤              │
└──────────┘       ┆       │      TAG ID      │              │
                   ┆       │     KEYWORD      │              │
                   ┆       │    ICON TYPE     │              │
                   ┆       │  STARTING POINT  │   0..N        │
                   ┆       │     POSITION     │◀──────────┐   │
                   ┆       │     PRIORITY     │           │   │
                   ┆       │     CONTENT      │           │   │
                   ┆       └──────────────────┘           │   │
                   ┆              ▲ 0..2                   │   │
                   ┆              │                        │   │
                   ┆              │ 0..1                   │   │
           0..N    ┆       ┌──────────────────────────────┐   │
             ──────────────▶│         CONNECTOR          │   │
                   ┆       ├────────────────────────────┤   │
                   ┆       │        CONNECTOR ID        │   │
                   ┆       │   SIMPLE CONNECTOR END 1   │   │
                   ┆       │   SIMPLE CONNECTOR END 2   │   │
                   ┆       │ DIRECTIONAL CONNECTOR TIP  │   │
                   ┆       │ DIRECTIONAL CONNECTOR BASE │   │
                   ┆       │ BIDIRECTIONAL CONNECTOR TIP 1 │ │
                   ┆       │ BIDIRECTIONAL CONNECTOR TIP 2 │ │
                   ┆       └────────────────────────────┘   │
```

# FIG. 3

```
         ┌──────────────┐
         │    START     │
         └──────┬───────┘
                │
         ┌──────▼───────┐  S201
         │ ACQUIRE DATA │
         └──────┬───────┘
                │
  ┌─────────────▼──────────────┐  S202
  │        DATA FINISHED? ──────┼── Yes ──┐
  └─────────────┬──────────────┘         │
                │ No                      │
  ┌─────────────▼──────────────┐  S203    │
  │        TAG DATA? ───────────┼── No     │
  └─────────────┬──────────────┘    │     │
                │ Yes  S204          │     │
         ┌──────▼───────┐           │     │
         │RECORD TAG DATA│          │     │
         └──────────────┘           │     │
                                     │     │
  S205   ┌─────────────────────┐    │     │
         │   CONNECTOR DATA? ───┼─ No │     │
         └─────────┬───────────┘  │  │     │
                   │ Yes  S206     │  │     │
         ┌─────────▼───────────┐  │  │     │
         │RECORD CONNECTOR DATA│  │  │     │
         └─────────────────────┘  │  │     │
                                   │  │     │
  S207 ┌──────────────────┐        │  │     │
   No ─┤   GROUP DATA?     │        │  │     │
       └────────┬─────────┘        │  │     │
                │ Yes  S208         │  │     │
         ┌──────▼───────┐          │  │     │
         │RECORD GROUP DATA│        │  │     │
         └──────────────┘          │  │     │
                                                │
         ┌──────────────┐  S209              │
         │  SEND DATA   │◄───────────────────┘
         └──────┬───────┘
                │
         ┌──────▼───────┐
         │     END      │
         └──────────────┘
```

# FIG. 4

```
        ┌─────────────────────────┐
        │   RECORDING TAG DATA     │
        └─────────────────────────┘
                    │
                    ▼
        ┌─────────────────────────┐  S301
        │     ACQUIRE KEYWORD      │
        └─────────────────────────┘
                    │
                    ▼
        ┌─────────────────────────┐  S302
        │    ACQUIRE ICON TYPE     │
        └─────────────────────────┘
                    │
                    ▼           S303
               ◇─────────◇          Yes
              ◇ STARTING  ◇─────────┐
               ◇ POINT? ◇           │
                ◇───────◇           │
                    │ No    S304    │
                    ▼               │
        ┌─────────────────────────┐ │
        │    ACQUIRE POSITION      │ │
        └─────────────────────────┘ │
                    │◄──────────────┘
                    ▼           S305
        ┌─────────────────────────┐
        │      ACQUIRE SIZE        │
        └─────────────────────────┘
                    │
                    ▼           S306
        ┌─────────────────────────┐
        │       ADD RECORD         │
        └─────────────────────────┘
                    │
                    ▼
        ┌─────────────────────────┐
        │         RETURN           │
        └─────────────────────────┘
```

# FIG. 5

```
        ┌──────────────────────────────────┐
        │    RECORDING CONNECTOR DATA       │
        └──────────────────────────────────┘
                        │
                        │            S401
                        ▼
              ◇ SIMPLE CONNECTOR? ◇──── No ──┐
                        │                     │
                       Yes        S402        │
                        ▼                     │
        ┌──────────────────────────────────┐ │
        │   ACQUIRE END TAG INFORMATION     │ │
        └──────────────────────────────────┘ │
                        │                     │
          S403          ▼                     │
              ◇ DIRECTIONAL CONNECTOR? ◇── No ─┐
                        │                      │
         S404          Yes                     │
                        ▼                      │
        ┌──────────────────────────────────┐  │
        │   ACQUIRE TIP TAG INFORMATION     │  │
        └──────────────────────────────────┘  │
                        │        S405          │
                        ▼                      │
        ┌──────────────────────────────────┐  │
        │   ACQUIRE BASE TAG INFORMATION    │  │
        └──────────────────────────────────┘  │
                        │                      │
          S406          ▼                      │
              ◇ BIDIRECTIONAL CONNECTOR? ◇─ No ─┐
                        │                       │
                       Yes       S407           │
                        ▼                       │
        ┌──────────────────────────────────┐   │
        │   ACQUIRE TIP TAG INFORMATION     │   │
        └──────────────────────────────────┘   │
                        │        S408           │
                        ▼                       │
        ┌──────────────────────────────────┐   │
        │           ADD RECORD              │   │
        └──────────────────────────────────┘   │
                        │                       │
                        ▼                       │
        ┌──────────────────────────────────┐   │
        │            RETURN                 │◄──┘
        └──────────────────────────────────┘
```

# FIG. 6

```
        ┌─────────────────────────────┐
        │   RECORDING GROUP DATA      │
        └─────────────────────────────┘
                      │
                      ▼
        ┌─────────────────────────────┐
        │     ACQUIRE GROUP TYPE      │  S501
        └─────────────────────────────┘
                      │
                      ▼
        ┌─────────────────────────────┐
        │       SET GROUP TAG         │  S502
        └─────────────────────────────┘
                      │
                      ▼
        ┌─────────────────────────────┐
        │      ADD GROUP RECORD       │  S503
        └─────────────────────────────┘
                      │
                      ▼
              ◇ NUMBER OF        ◇  S504   Yes
              ◇ GROUP TAG?       ◇ ──────────┐
                      │ No    S505           │
                      ▼                      │
        ┌─────────────────────────────┐      │
        │    SET AFFILIATION TAG      │      │
        └─────────────────────────────┘      │
                      │           S506       │
                      ▼                      │
        ┌─────────────────────────────┐      │
        │    ADD GROUP TAG RECORD     │      │
        └─────────────────────────────┘      │
                      │                      │
                      ▼                      │
              ┌──────────────┐               │
              │   RETURN     │◄──────────────┘
              └──────────────┘
```

# FIG. 7

100a

Ⓢ
BEFORE
INCIDENT

RELATIVE
POSITION FROM
STARTING POINT
TAG

101

Ⓡ
MANUAL
IGNORE

100

PRIORITY

| | |
|---|---|
| Ⓢ | CHRONOLOGY ICON |
| Ⓡ | REASON ICON |
| Ⓔ | ILLUSTRATION ICON |
| Ⓒ | REQUEST ICON |

ICON TYPE

# FIG. 8

# FIG. 9A

100

120a

## CLASSIFICATION BASED ON AFFILIATION STATE

| GROUP TAG | AFFILIATION STATE | TAG |
|---|---|---|
| 1 | TAG ENTIRELY INCLUDED IN GROUPS | A |
| 2 | TAG CENTER IN GROUP | B |
| 3 | TAG HANGING ON GROUP | C |

# FIG. 9B

100

120b

## CLASSIFICATION BASED ON AFFILIATION POSITION

| GROUP TAG | AFFILIATION POSITION | TAG |
|---|---|---|
| 1 | TAG CENTER UP TO ONE-THIRD FROM LEFT EDGE | D |
| 2 | TAG CENTER FROM ONE-THIRD TO TWO-THIRDS | E |
| 3 | TAG CENTER FORWARD OF TWO-THIRDS | F |

# FIG. 9C

CLASSIFICATION BASED ON
AFFILIATION STATE AND
AFFILIATION POSITION

120c

FOURTH QUADRANT    FIRST QUADRANT

I

G

100

H

THIRD QUADRANT    SECOND QUADRANT

| GROUP TAG | AFFILIATION STATE/ AFFILIATION POSITION | TAG |
|---|---|---|
| 1 | TAG ENTIRELY INCLUDED IN FIRST QUADRANT | G |
| 2 | TAG CENTER IN FIRST QUADRANT | |
| 3 | TAG HANGING ON FIRST QUADRANT | |
| 4 | TAG ENTIRELY INCLUDED IN SECOND QUADRANT | |
| 5 | TAG CENTER IN SECOND QUADRANT | H |
| 6 | TAG HANGING ON SECOND QUADRANT | |
| 7 | TAG ENTIRELY INCLUDED IN THIRD QUADRANT | |
| 8 | TAG CENTER IN THIRD QUADRANT | |
| 9 | TAG HANGING ON THIRD QUADRANT | H |
| 10 | TAG ENTIRELY INCLUDED IN FOURTH QUADRANT | |
| 11 | TAG CENTER IN FOURTH QUADRANT | |
| 12 | TAG HANGING ON FOURTH QUADRANT | I |

# FIG. 10

150

```
1. BEFORE INCIDENT

   a. RISK MANAGEMENT

      (1) LACKING SIMULATION

      (2) ORGANIZATION DESIGN MISTAKES

      (3) ROUTINE WITHOUT REVISIONS


2. DURING OCCURRENCE

   a. IGNORE MANUAL

      RISK MANAGEMENT (LACKING SIMULATION)


3. DIFFUSION

   a. COMMUNICATION

      RISK MANAGEMENT (LACKING SIMULATION)

   b. LACKING KNOWLEDGE

      IGNORE MANUAL

      RISK MANAGEMENT (ORGANIZATION DESIGN MISTAKES)

   c. VAGUE RESPONSIBILITY AND AUTHORITY
```

# F I G. 11

# FIG. 12A

| TAG ID | KEYWORD | ICON TYPE | START POINT | POSITION | PRIORITY | CONTENT | CREATION DATE/TIME | CREATOR | EVALU-ATION |
|---|---|---|---|---|---|---|---|---|---|
| T00001 | BEFORE INCIDENT | CHRONOLOGY | ◯ | (0, 0) | 10 | EXPLANATION | yymmdd | A | ★★★ |
| T00002 | DURING OCCURRENCE | CHRONOLOGY | T00001 | (10, 0) | 10 | EXPLANATION | yymmdd | A | ★★☆ |
| T00003 | DIFFUSION | CHRONOLOGY | T00001 | (20, 0) | 10 | EXPLANATION | yymmdd | A | ★☆☆ |
| T00004 | RISK MANAGEMENT | REASON | T00001 | (2, 5) | 15 | EXPLANATION | yymmdd | A | ☆☆☆ |
| T00005 | LACKING SIMULATION | ILLUSTRATION | T00001 | (3, 10) | 8 | EXPLANATION | yymmdd | A | ☆☆☆ |
| T00006 | ORGANIZATION DESIGN MISTAKES | ILLUSTRATION | T00001 | (3, 15) | 8 | EXPLANATION | yymmdd | A | ☆☆☆ |
| T00007 | ROUTINE WITHOUT REVISIONS | ILLUSTRATION | T00001 | (3, 20) | 8 | EXPLANATION | yymmdd | A | ☆☆☆ |
| T00008 | IGNORE MANUAL | REASON | T00001 | (12, 10) | 15 | EXPLANATION | yymmdd | A | ☆☆☆ |
| T00009 | COMMUNICATION | REQUEST | T00001 | (23, 10) | 15 | EXPLANATION | yymmdd | A | ☆☆☆ |
| T00010 | LACKING KNOWLEDGE | REQUEST | T00001 | (23, 15) | 15 | EXPLANATION | yymmdd | A | ☆☆☆ |
| T00011 | VAGUE RESPONSIBILITY/ AUTHORITY | REQUEST | T00001 | (23, 20) | 15 | EXPLANATION | yymmdd | A | ☆☆☆ |

EP 3 040 876 A1

## FIG. 12B

| CONNECTOR ID | SIMPLE CONNECTOR END 1 | SIMPLE CONNECTOR END 2 | DIRECTIONAL CONNECTOR TIP | DIRECTIONAL CONNECTOR BASE | BIDIRECTIONAL CONNECTOR TIP 1 | BIDIRECTIONAL CONNECTOR TIP 2 | CREATION DATE/TIME | CREATOR |
|---|---|---|---|---|---|---|---|---|
| C00001 | T00001 | T00004 | | − | − | − | yymmdd | A |
| C00002 | T00004 | T00005 | − | − | − | − | yymmdd | A |
| C00003 | T00004 | T00006 | − | − | − | − | yymmdd | A |
| C00004 | T00004 | T00007 | − | − | − | − | yymmdd | A |
| C00005 | T00002 | T00008 | − | − | − | − | yymmdd | A |
| C00006 | T00003 | T00009 | − | − | − | − | yymmdd | A |
| C00007 | T00003 | T00010 | − | − | − | − | yymmdd | A |
| C00008 | T00003 | T00011 | − | − | − | − | yymmdd | A |
| C00009 | − | − | T00008 | T00004 | − | − | yymmdd | A |
| C00010 | − | − | T00009 | T00004 | − | − | yymmdd | A |
| C00011 | − | − | T00008 | T00005 | − | − | yymmdd | A |
| C00012 | − | − | T00010 | T00008 | − | − | yymmdd | A |
| C00013 | − | − | T00010 | T00006 | − | − | yymmdd | A |

EP 3 040 876 A1

# FIG. 13C

| GROUP ID | GROUP TYPE | GROUP TAG 1 | GROUP TAG 2 | GROUP TAG 3 | · · · | CREATION DATE/TIME | CREATOR |
|---|---|---|---|---|---|---|---|
| G00001 | FLOW | GT00001 | GT00002 | GT00003 | · · · | yymmdd | A |
| G00002 | SIMPLE | GT00004 | GT00005 | GT00006 | · · · | yymmdd | A |
| G00003 | SIMPLE | GT00007 | GT00008 | GT00009 | · · · | yymmdd | A |
| G00004 | SIMPLE | GT00010 | GT00011 | GT00012 | · · · | yymmdd | A |

# FIG. 13D

| GROUP TAG ID | FIRST TAG | SECOND TAG | THIRD TAG | FOURTH TAG | FIFTH TAG | · · · | NTH TAG |
|---|---|---|---|---|---|---|---|
| GT00001 | T00001 | – | – | – | – | · · · | – |
| GT00002 | T00002 | – | – | – | – | · · · | – |
| GT00003 | T00003 | – | – | – | – | · · · | – |
| GT00004 | T00001 | T00004 | T00005 | T00006 | T00007 | · · · | – |
| GT00005 | – | – | – | – | – | · · · | – |
| GT00006 | – | – | – | – | – | · · · | – |
| GT00007 | T00002 | T00008 | – | – | – | · · · | – |
| GT00008 | – | – | – | – | – | · · · | – |
| GT00009 | – | – | – | – | – | · · · | – |
| GT00010 | T00003 | T00009 | T00010 | T00011 | – | · · · | – |
| GT00011 | – | – | – | – | – | · · · | – |
| GT00012 | – | – | – | – | – | · · · | – |

# FIG. 14

```
        ┌─────────────────┐
        │      START      │
        └─────────────────┘
                 │
                 ▼
        ┌─────────────────┐  S601
        │  ACQUIRE DATA   │
        └─────────────────┘
                 │
                 ▼
              ╱     ╲   S602
            ╱  DATA   ╲      Yes
           ◁ FINISHED? ▷──────────┐
            ╲         ╱           │
              ╲     ╱             │
                │ No              │
                ▼                 │
        ┌─────────────────┐  S603 │
        │  DETERMINE DATA │       │
        └─────────────────┘       │
                 │                 │
                 ▼                 │
        ┌─────────────────┐  S604 │
        │  SET ATTRIBUTES │       │
        └─────────────────┘       │
                 │                 │
                 ▼                 │
        ┌─────────────────┐  S605 │
        │  ARRANGE DATA   │       │
        └─────────────────┘       │
                 │                 │
                 ▼                 │
        ┌─────────────────┐  S606 │
        │ MAKE VISUALIZATION│     │
        └─────────────────┘       │
                 │                 │
                 ▼                 │
        ┌─────────────────┐  S607 │
        │DISPLAY SUGGESTION│      │
        └─────────────────┘       │
                 │                 │
                 ▼                 │
        ┌─────────────────┐
        │       END       │
        └─────────────────┘
```

# FIG. 15A

# FIG. 15B

# FIG. 16

```
         ( SUGGESTION PROCESS )
                  │
                  ▼                          S611
         < TRIGGER CONDITION
            ESTABLISHED? >─────────── No ──┐
                  │ Yes                     │
                  ▼                  S612    │
         [ SET ID ]                          │
                  │                          │
                  ▼                  S613     │
         < SUGGESTION INFORMATION EXISTS? >── No ──→
                  │ Yes                      │
                  ▼                  S614     │
         [ DISPLAY SUGGESTION ]              │
                  │                          │
                  ▼                  S615     │
         [ SPECIFY CORRESPONDING ACTION ]    │
                  │                          │
                  ▼                          │
         [ ACTION FOR GENERATING TAG,        │
           CONNECTOR AND GROUP,       S616    │
           AND SETTLING THEM ]               │
                  │                          │
                  ▼                  S617     │
         [ STORE IN MEMORY ]                 │
                  │                          │
                  ▼◄────────────────────────┘
              ( RETURN )
```

# FIG. 17

```
        ┌─────────────────────┐
        │  EDITING PROCESS    │
        └─────────────────────┘
                   │
                   ▼
            ╱─────────────╲              S621
           ╱ MANIPULATION  ╲────No──────┐
           ╲   INPUT?      ╱             │
            ╲─────────────╱              │
                   │Yes                  │
                   ▼                     │
        ┌─────────────────────┐   S622   │
        │ EDIT IN ACCORDANCE  │          │
        │ WITH MANIPULATION   │          │
        │      INPUT          │          │
        └─────────────────────┘          │
                   │                     │
                   ▼                     │
            ╱─────────────╲     S623      │
           ╱   MEMORY      ╲────No──────→ │
           ╲  COMMAND?     ╱             │
            ╲─────────────╱              │
                   │Yes                  │
                   ▼                     │
        ┌─────────────────────┐   S624   │
        │   STORE IN MEMORY   │          │
        └─────────────────────┘          │
                   │                     │
                   ▼←────────────────────┘
            ╱─────────────╲      S625
    No─────╱   FINISHED?   ╲
           ╲               ╱
            ╲─────────────╱
                   │Yes
                   ▼
        ┌─────────────────────┐
        │      RETURN         │
        └─────────────────────┘
```

# FIG. 18

```
        ( START )
            │
            ▼
    ┌───────────────┐  S701
    │ ACQUIRE DATA  │
    └───────────────┘
            │
            ▼
    ┌───────────────┐  S702
    │ ACQUIRE WEIGHTING │
    │   INFORMATION   │
    └───────────────┘
            │
            ▼
        ◇ DATA FINISHED? ◇ ── Yes ──┐   S703
            │                        │
            No                       │
            ▼                        │
    ┌───────────────┐  S704          │
    │ DETERMINE DATA│                │
    └───────────────┘                │
            │                        │
            ▼                        │
    ┌───────────────┐  S705          │
    │ ACQUIRE ATTRIBUTES │           │
    └───────────────┘                │
            │                        │
            ▼                        │
    ┌───────────────┐  S706          │
    │  DO WEIGHTING │                │
    └───────────────┘                │
            │                        │
            ▼                        │
    ┌───────────────┐  S707          │
    │ CALCULATE SCORING │◄───────────┘
    └───────────────┘
            │
            ▼
    ┌───────────────┐  S708
    │ OUTPUT RESULTS│
    └───────────────┘
            │
            ▼
        ( END )
```

# FIG. 19

| TAG |
|---|
| TAG ID<br>KEYWORD<br>ICON TYPE<br>STARTING POINT<br>POSITION<br>PRIORITY<br>CONTENT |

| CONNECTOR |
|---|
| CONNECTOR ID<br>SIMPLE CONNECTOR END 1<br>SIMPLE CONNECTOR END 2<br>DIRECTIONAL CONNECTOR TIP<br>DIRECTIONAL CONNECTOR BASE<br>BIDIRECTIONAL CONNECTOR TIP 1<br>BIDIRECTIONAL CONNECTOR TIP 2 |

| GROUP |
|---|
| GROUP ID<br>GROUP TYPE<br>GROUP TAG 1<br>GROUP TAG 2<br>GROUP TAG 3 |

| | | |
|---|---|---|
| START DATE/TIME | | yymmdd |
| END DATE/TIME | | yymmdd |
| NUMBER OF PEOPLE | | 1 |
| NUMBER OF TAGS | | 11 |
| | CHRONOLOGY TAGS | 3 |
| | REASON TAGS | 2 |
| | ILLUSTRATION TAGS | 3 |
| | COMPARISON TAGS | 3 |
| NUMBER OF CONNECTIONS | | 13 |
| | SIMPLE CONNECTIONS | 8 |
| | DIRECTIONAL CONNECTIONS | 5 |
| | BIDIRECTIONAL CONNECTIONS | 0 |
| NUMBER OF GROUPS | | 4 |
| | SIMPLE GROUPS | 3 |
| | FLOW GROUPS | 1 |
| | QUADRANT GROUPS | 0 |

# FIG. 20

| CONNECTOR |
|---|
| CONNECTOR ID |
| SIMPLE CONNECTOR END 1 |
| SINPLE CONNECTOR END 2 |
| DIRECTIONAL CONNECTOR TIP |
| DIRECTIONAL CONNECTOR BASE |
| BIDIRECTIONAL CONNECTOR TIP 1 |
| BIDIRECTIONAL CONNECTOR TIP 2 |

| GROUP TAG |
|---|
| GROUP TAG ID |
| FIRST TAG |
| SECOND TAG |
| THIRD TAG |
| FOURTH TAG |
| FIFTH TAG |

| TAG |
|---|
| TAG ID |
| KEYWORD |
| ICON TYPE |
| STARTING POINT |
| POSITION |
| PRIORITY |
| CONTENT |

160

| | RELATIONSHIP INFLUENCE (WEIGHTING) |
|---|---|
| SIMPLE CONNECTOR END 1 | 1 |
| SIMPLER CONNECTOR END 2 | 1 |
| DIRECTIONAL CONNECTOR TIP | 2 |
| DIRECTIONAL CONNECTOR BASE | 3 |
| BIDIRECTIONAL CONNECTOR TIP 1 | 4 |
| BIDIRECTIONAL CONNECTOR TIP 2 | 4 |

| | NUMBER OF CONNECTIONS | RELATIONSHIP INFLUENCE | | | | NUMBER OF GROUPS | PRIORITY | COMPOSITE SCORE |
|---|---|---|---|---|---|---|---|---|
| | | 1 | 2 | 3 | 4 | | | |
| T00001 | 1 | 1 | 0 | 0 | 0 | 2 | 10 | 13 |
| T00002 | 1 | 1 | 0 | 0 | 0 | 2 | 10 | 13 |
| T00003 | 3 | 3 | 0 | 0 | 0 | 2 | 10 | 15 |
| T00004 | 6 | 4 | 0 | 2 | 0 | 1 | 15 | 26 |
| T00005 | 2 | 1 | 0 | 1 | 0 | 1 | 8 | 13 |
| T00006 | 2 | 1 | 0 | 1 | 0 | 1 | 8 | 13 |
| T00007 | 1 | 0 | 0 | 0 | 0 | 1 | 8 | 9 |
| T00008 | 4 | 1 | 2 | 1 | 0 | 1 | 15 | 24 |
| T00009 | 2 | 1 | 1 | 0 | 0 | 1 | 15 | 19 |
| T00010 | 3 | 1 | 2 | 0 | 0 | 1 | 15 | 21 |
| T00011 | 1 | 1 | 0 | 0 | 0 | 1 | 15 | 17 |

# FIG. 21

DIGEST CREATION AND OUTPUT
PROCESS

RANK TAGS BY COMPOSITE SCORE, AND
EXTRACT TOP-RANKED TAG — S801

BLOCK TAGS — S802

SPECIFY TAG WITH HIGHEST COMPOSITE
SCORE IN EACH BLOCK — S803

DETERMINE, IN ACCORDANCE WITH IMPORTANCE
LOGIC, INPORTANCE OF DESIGNATED TAG IN
ACCORDANCE WITH IMPORTANCE LOGIC — S804

SET IMPORTANCE OF BLOCK
ON BASIS OF TAG IMPORTANCE — S805

GENERATE OUTPUT AUDIO TEXT — S806

OUTPUT VIDEO CORRESPONDING TO AUDIO — S807

END

# FIG. 22

## INTERNATIONAL SEARCH REPORT

| | International application No. |
|---|---|
| | PCT/JP2014/072841 |

| A. CLASSIFICATION OF SUBJECT MATTER |
|---|
| *G06F17/21*(2006.01)i, *G06F3/048*(2013.01)i |

According to International Patent Classification (IPC) or to both national classification and IPC

| B. FIELDS SEARCHED |
|---|
| Minimum documentation searched (classification system followed by classification symbols) |
| G06F17/21, G06F3/048 |

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | Takuya NISHIKIDO et al., "Valuable Change Detection in Keyword Map Animation", IPSJ SIG Notes, 17 March 2008 (17.03.2008), vol.2008, no.29, pages 107 to 114 | 1-5,7-9<br>6 |
| A | Uncho CHO et al., "Auto-Generation of Discussion-Map from Speech-Recognized Minute", 2006 Nendo Dai 20 Kai Proceedings of the Annual Conference of JSAI [CD-ROM], 09 June 2006 (09.06.2006), 3C3-5 | 1-9 |
| A | JP 2007-193380 A (So-net Entertainment Kabushiki Kaisha), 02 August 2007 (02.08.2007), entire text; all drawings (Family: none) | 1-9 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 October, 2014 (30.10.14) | 11 November, 2014 (11.11.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007328471 A
- JP 2013178303 A